# EUROPEAN PATENT SPECIFICATION

(11) **EP 4 147 930 B1**
(45) Date of publication and mention of the grant of the patent: **17.09.2025**
(21) Application number: 20945990.8
(22) Date of filing: 21.07.2020
(51) Int. Cl.: B60T 13/66, B60T 7/12, B60T 13/68, B60T 13/74, B60T 15/02, B60T 15/04, B60T 15/36, B60T 17/22

(54) **BRAKE CONTROL DEVICE, BRAKE CONTROL SYSTEM, AND CONTROL METHOD**
BREMSSTEUERUNGSVORRICHTUNG, BREMSSTEUERUNGSSYSTEM UND STEUERUNGSVERFAHREN
DISPOSITIF DE COMMANDE DE FREIN, SYSTÈME DE COMMANDE DE FREIN ET PROCÉDÉ DE COMMANDE

(43) Date of publication of application: 15.03.2023
(73) Proprietor: Shenzhen Yinwang Intelligent Technologies Co., Ltd., Shenzhen, Guangdong 518129 (CN)
(72) Inventor: CHEN, Xiaohua, Shenzhen, Guangdong 518129 (CN); ZHANG, Yongsheng, Shenzhen, Guangdong 518129 (CN); LIU, Yalin, Shenzhen, Guangdong 518129 (CN)
(74) Representative: Pfenning, Meinig & Partner mbB
(86) International application number: PCT/CN2020/103152
(87) International publication number: WO 2022/016347

(56) References cited:
- EP-A1- 3 461 706
- WO-A1-2019/186460
- CN-A- 104 228 593
- CN-A- 108 773 369
- CN-A- 110 758 365
- CN-U- 205 220 647
- CN-U- 208 881 771
- DE-A1- 102013 205 639
- KR-A- 20190 047 460
- KR-B1- 102 021 465
- US-A1- 2016 009 267
- US-A1- 2019 232 935

## Description

### TECHNICAL FIELD

This invention generally relates to the automobile field, and the invention, more specifically, relates to a brake control apparatus, a brake control system, and a control method and a control apparatus for a brake control system.

### BACKGROUND

A brake control system of an automobile exerts a specific braking force on a wheel of the automobile, to perform a specific degree of forced braking on the wheel. The brake control system is to force, based on a requirement of a driver or a controller, a driving automobile to decelerate or even stop, or to stably park a stopped automobile under various road conditions (for example, on a slope), or to keep a stable speed of an automobile running down a slope.

The brake control system may increase or decrease pressure of a brake fluid in the brake control system based on a driving requirement of a vehicle. For example, the brake control system operates in a brake-by-wire mode. When the driver depresses a braking pedal, a brake control apparatus in the brake control system may extrude, based on a route of the braking pedal, the brake fluid into a braking pipeline communicating with a wheel part, to provide a braking force for the automobile. For another example, in an autonomous driving mode, when an autonomous driving system confirms that deceleration and stopping need to be performed, a brake control apparatus may extrude, based on an instruction of the controller, the brake fluid into a braking pipeline communicating with a wheel part, to provide a braking force for the automobile. For still another example, the brake control system operates in a brake-by-wire mode. When a driver releases a braking pedal, a brake control apparatus may draw a brake fluid from a brake wheel cylinder of the automobile to a fluid storage apparatus based on a route of the braking pedal, to reduce a braking force for the automobile. For yet another example, in an autonomous driving mode, when an autonomous driving system confirms that acceleration needs to be performed, a brake control apparatus may draw a brake fluid from a brake wheel cylinder of the automobile to a fluid storage apparatus based on an instruction of the controller, to reduce a braking force for the automobile.

Specifically, the brake control apparatus increases pressure in a hydraulic cylinder, so that a brake fluid in the hydraulic cylinder flows into a corresponding braking execution apparatus (for example, a wheel braking unit), to provide a braking force for the automobile. In a conventional pressurization method, unidirectional pressure building is performed. Backing for fluid replenishment needs to be performed when a period of braking time is too long, and the braking force is interrupted in a period of time of performing backing for fluid replenishment. Bidirectional pressure building can be used to overcome a disadvantage of unidirectional pressure building to a specific degree. In an existing bidirectional pressure building solution, two hydraulic chambers are disposed in the hydraulic cylinder, and may be respectively referred to as a front chamber and a rear chamber. Pressurization can be implemented when a piston advances toward the front chamber or backs toward the rear chamber. A pressurization manner in which the piston advances toward the front chamber may be referred to as forward pressure building, and a pressurization manner in which the piston backs toward the rear chamber may be referred to as backward pressure building. However, in the existing bidirectional pressure building solution, during switching from forward pressure building to backward pressure building, pressure cannot be increased for a period of time or even temporarily drops. Consequently, the braking force cannot be continuously provided, and a braking effect is affected. In brief, there is a disadvantage in a pressure building process in the existing bidirectional pressure building solution, and consequently, a braking effect becomes poorer.

Therefore, how to better build pressure to achieve a better brake control effect is a technical problem to be solved as soon as possible.

EP 3 461 706 A1 discloses an electronic braking system and four operation methods thereof. The electronic braking system and operation methods thereof include a hydraulic pressure supplier configured to create hydraulic pressure by moving a hydraulic piston based on an electric signal output to correspond to displacement of a brake pedal, and a hydraulic controller configured to control hydraulic pressure of a pressure medium applied to each wheel cylinder, and performs normal operation mode, abnormal operation mode, regenerative braking mode, and check mode by controlling a plurality of valves equipped in the hydraulic controller downstream of the hydraulic pressure supplier. For carrying out these modes, the electronic brake system comprises seven hydraulic flow paths for taking up said plurality of valves.

KR 20190047460 A discloses an electric brake system which can quickly perform braking even if an error occurs in the system. According to an aspect of this disclosure, the electric brake system comprises a reservoir to store oil; a master cylinder which is connected to the reservoir, and includes a first master chamber and a second master chamber and a first piston and a second piston arranged on the master chambers to discharge oil in accordance with a pedal force of a brake pedal; a booster arranged on one side of the master cylinder to increase a pedal force of the brake pedal by a hydraulic pressure; a booster operating unit connected to the booster to supply a hydraulic pressure to the booster; and an electric brake unit to receive a braking intention of a driver in an electrical signal to operate mechanically, and control a flow of a hydraulic pressure transferred to a wheel.

### SUMMARY

The object of the present invention is to provide a brake control apparatus, a brake control system, and a control method of the brake control system, to implement bidirectional pressure building during which seamless switching is performed, and achieve a better brake control effect. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, the invention provides a brake control apparatus is provided, including a hydraulic cylinder 200, a push rod 230, a piston 240, a driving apparatus 300, a first control valve 801, a second control valve 802, a third control valve 803, and a fourth valve. The piston 240 is disposed in the hydraulic cylinder 200, to divide the hydraulic cylinder 200 into a first hydraulic chamber 210 and a second hydraulic chamber 220. The driving apparatus 300 drives the push rod 230 to push the piston 240 to move along an inner wall of the hydraulic cylinder 200; a first end of the first control valve 801 is connected to the second hydraulic chamber 220, the first end of the first control valve 801 is further connected to a first end of the fourth valve, a second end of the first control valve 801 is connected to a braking circuit 420, the second end of the first control valve 801 is further connected to a first end of the second control valve 802, a second end of the second control valve 802 is connected to the first hydraulic chamber 210, the second end of the second control valve 802 is further connected to a first end of the third control valve 803, a second end of the third control valve 803 is connected to a braking circuit 410, and the second end of the third control valve 803 is further connected to a second end of the fourth valve; and opening/closing states of the first control valve 801, the second control valve 802, the third control valve 803, and the fourth valve are controlled, to allow the first hydraulic chamber 210 to communicate with the second hydraulic chamber 220 when the piston 240 moves toward the first hydraulic chamber 210, and to prevent the first hydraulic chamber 210 from communicating with the second hydraulic chamber 220 when the piston 240 moves toward the second hydraulic chamber 220.

In a technical solution of this application, the brake control apparatus may perform bidirectional pressure building, so that a brake fluid can flow to a braking circuit, to provide a braking force for a vehicle, and each valve and a connection manner of the valve are provided, so that the second hydraulic chamber 220 and the first hydraulic chamber 210 communicate with each other. There is always equal hydraulic pressure in the second hydraulic chamber 220 and the first hydraulic chamber 210 or a very small pressure difference, to implement seamless switching between forward pressure building and backward pressure building, and better meet a braking requirement of the vehicle.

In addition, during forward pressure building, the brake fluid flows to the two braking circuits through the second control valve 802 and the third control valve 803, and the first control valve 801 is used to introduce a part of the brake fluid into the second hydraulic chamber 220; and during backward pressure building, the brake fluid flows to the two braking circuits through the first control valve 801 and a fourth one-way valve 904. It is equivalent to that the first control valve 801 separately plays two functions in a bidirectional pressure building process: One is to control flowing of the brake fluid flowing to the braking circuit, and the other is to control flowing of the brake fluid flowing to the second hydraulic chamber 220, to effectively reduce a quantity of valves. However, opening and closing of each braking circuit are controlled by being connected to two independent valves. Even if one of the valves is damaged, the other braking circuit may be used to implement brake control. It is equivalent to ensuring that even if some valves are damaged, at least one braking circuit operates normally, to improve safety. It is equivalent to ensuring a safety requirement and reducing the quantity of valves as much as possible.

It can be learned that there is same pressure in the two hydraulic chambers, switching between forward pressure building and backward pressure building may be seamlessly performed, and there is further a small difference between effective action areas of bidirectional pressure building. Therefore, there is a small change in a pressurization rate existing during bidirectional pressure building. It is equivalent to that there is a small difference between rates of extruding the brake fluid. Therefore, the difference between the rates existing before and after switching is reduced.

It should be noted that, in a conventional pressure building manner, in either a low pressure mode or a high pressure mode, a pressure difference between the two hydraulic chambers increases as the piston advances. Therefore, the driving apparatus needs to continuously increase a force applied to the piston, to perform continuous pressure building. However, in this embodiment of this application, in a forward pressure building process, the two hydraulic chambers communicate with each other, and there is same pressure or a small pressure difference. Therefore, pressure building can be continuously performed without a need to apply a too strong force by the driving apparatus. In addition, when the two hydraulic chambers communicate with each other, it is equivalent to that pressure in the second hydraulic chamber always remains similar to pressure in a static state. Therefore, pressure in the first hydraulic chamber only needs to be slightly higher than the pressure in the static state. In a backward pressure building process, although the two hydraulic chambers do not communicate with each other, a brake fluid in the first hydraulic chamber can be replenished in a timely manner. Therefore, when forward pressure building is performed again through switching, pressure in the second hydraulic chamber is higher than pressure in the first hydraulic chamber, a force for pushing the piston to move toward the first hydraulic chamber is reduced, and a brake fluid can be extruded immediately from the first hydraulic chamber without a delay. It can be understood that, in this embodiment of this application, when a same braking requirement is met, maximum pressure achieved in a hydraulic chamber is slightly lower than pressure in the conventional bidirectional pressure building. Therefore, there are lower parameter requirements such as process requirements and/or configurations of the hydraulic cylinder and the driving apparatus, an outer wall of the hydraulic cylinder 200 and the piston 240 need to withstand a lower maximum pressure, and the driving apparatus 300 also needs to provide a weaker driving force.

The fourth valve may be a one-way valve or a control valve. The one-way valve supports only a one-way flow. In this embodiment of this application, one end that is of the one-way valve and that is first passed through along a flow direction is referred to as a first end, and one end that is later passed through is referred to as a second end. In other words, in this embodiment of this application, when the one-way valve is used, the brake fluid can only flow from the first end of the one-way valve to the second end, but cannot flow from the second end to the first end. However, it should be understood that this is only for ease of understanding. Names of the first end and the second end are not limited. In other words, a description that the brake fluid can only flow from the second end to the first end may alternatively be provided. The control valve can be passed through in two directions.

The one-way valve may be considered as a mechanical valve, can be used without being powered on, and can only be passed through in one direction. The control valve may be considered as an electronic valve, can be used only after being powered up, and can be passed through in two directions. In a braking scenario, after the one-way valve is used for a long period of time, elasticity of a spring is damaged, so that the one-way valve slowly leaks oil, and it is difficult to detect. Therefore, a process requirement of the one-way valve is high. However, the control valve can be used only by controlling opening or closing of the control valve by powering on (powering up) or powering off the control valve, and can be passed through in two directions.

In addition, the control valve includes a normally closed control valve and a normally open control valve. It can be understood that the normally closed control valve is open when being powered on and is closed when being powered off. In other words, the normally closed control valve is open only when being powered up, so that a fluid can flow through the control valve. In a brake control apparatus 1000, each used control valve is a normally closed control valve. It can be understood that the normally open control valve is closed when being powered on and is open when being powered off. In other words, the normally open control valve is closed only when being powered up, to prevent a fluid from flowing through the control valve. In this embodiment of this application, normally open control valves such as a fifth control valve 805 and a sixth control valve 806 described below are used for mechanical braking. In other words, no power is supplied during mechanical braking, and the brake control apparatus 1000 cannot operate, but the brake fluid may still flow through the normally open control valve.

It should be noted that, in the bidirectional pressure building process, due to existence of the push rod and a route limitation, a quantity of brake fluids in the second hydraulic chamber 220 is usually less than a quantity of brake fluids in the first hydraulic chamber 210. In addition, a brake fluid already exists in a pipeline, and there is a specific pressure value. Therefore, if the two hydraulic chambers still communicate with each other during backward pressure building, it is equivalent to dividing a small quantity of brake fluids again. A part of the brake fluid flows back to the first hydraulic chamber, and a part of the brake fluid is left to the braking circuit. This greatly reduces a period of action time of backward pressure building. It is equivalent to increasing a switching frequency of bidirectional pressure building. Therefore, in this embodiment of this application, during backward pressure building, when the second control valve 802 and the third control valve 803 are closed, the brake fluid can only flow to the braking circuit, but cannot flow to the first hydraulic chamber 210. Such an operation can be used to effectively improve a braking effect. The first hydraulic chamber 210 may be replenished with a fluid through the interface 200c.

With reference to the first aspect, in some implementations of the first aspect, the fourth valve is a fourth one-way valve 904. When the piston 240 moves toward the first hydraulic chamber 210, the first control valve 801, the second control valve 802, and the third control valve 803 are in an open state, and the fourth one-way valve 904 is in a closed state; and when the piston 240 moves toward the second hydraulic chamber 220, the first control valve 801 and the fourth one-way valve 904 are in an open state, and the second control valve 802 and the third control valve 803 are in a closed state.

In the forward pressure building process, the driving apparatus 300 drives, by using the push rod 230, the piston 240 to move from right to left (toward the first hydraulic chamber 210), so that a volume of the first hydraulic chamber 210 is reduced and hydraulic pressure is increased, and a volume of the second hydraulic chamber 220 is increased and hydraulic pressure is reduced. The brake fluid is extruded through the interface 200b of the first hydraulic chamber 210, and the brake fluid flowing out of the first hydraulic chamber 210 is divided into a first path and a second path. The first path flows to the braking circuit 410 through the third control valve 803, and the second path is further divided into a third path and a fourth path after flowing through the second control valve 802. The third path flows to the braking circuit 420, and the fourth path flows to the second hydraulic chamber 220 through the first control valve 801, and flows into the second hydraulic chamber 220 through the interface 200a of the second hydraulic chamber 220.

In the backward pressure building process, the driving apparatus 300 drives, by using the push rod 230, the piston 240 to move from left to right (toward the second hydraulic chamber 220), to extrude the brake fluid through the interface 200a of the second hydraulic chamber 220. The extruded brake fluid is divided into a fifth path and a sixth path. The fifth path flows to the braking circuit 410 through the fourth valve (herein, the fourth valve is the fourth one-way valve 904), and the sixth path flows to the braking circuit 420 through the first control valve 801. In the backward pressure building process, the two hydraulic chambers do not communicate with each other, and the first hydraulic chamber 210 may be replenished with a fluid through the interface 200c of the first hydraulic chamber 210.

With reference to the first aspect, in some implementations of the first aspect, the fourth valve is a fourth control valve 804. When the piston 240 moves toward the first hydraulic chamber 210, the first control valve 801, the second control valve 802, the third control valve 803, and the fourth control valve 804 are in an open state; and when the piston 240 moves toward the second hydraulic chamber 220, the first control valve 801 and the fourth control valve 804 are in an open state, and the second control valve 802 and the third control valve 803 are in a closed state.

In the forward pressure building process, the piston 240 moves from right to left, and the brake fluid in the first hydraulic chamber 210 is extruded and flows out through the interface 200b. The extruded brake fluid is divided into a first path and a second path, and the first path is divided into a fifth path and a seventh path after passing through the third control valve 803. The fifth path flows into the second hydraulic chamber 220 through the fourth control valve 804 and the interface 200a, and the seventh path flows to the braking circuit 410. The second path is divided into a third path and a fourth path after passing through the second control valve 802. The third path flows to the braking circuit 420, and the fourth path flows into the second hydraulic chamber 220 through the first control valve and the interface 200a.

In the backward pressure building process, the piston 240 moves from left to right, and the brake fluid in the second hydraulic chamber 220 is extruded and flows out through the interface 200a. The extruded brake fluid is divided into two paths. One path flows to the braking circuit 410 after passing through the fourth control valve 804, and the other path flows to the braking circuit 420 after passing through the first control valve 801.

With reference to the first aspect, in some implementations of the first aspect, the hydraulic cylinder 200 further includes an interface 200a, an interface 200b, an interface 200c, and an interface 200d; the interface 200a and the interface 200d are disposed on an outer wall of the hydraulic cylinder 200 in which the second hydraulic chamber 220 is located, and the interface 200b and the interface 200c are disposed on the outer wall of the hydraulic cylinder 200 in which the first hydraulic chamber 210 is located; when the piston 240 moves toward the first hydraulic chamber 210, a brake fluid in the first hydraulic chamber 210 is extruded through the interface 200b, a part of the extruded brake fluid flows into the second hydraulic chamber 220 through the interface 200a, and a brake fluid in a pipeline connected to the interface 200d flows into the second hydraulic chamber 220; and when the piston 240 moves toward the second hydraulic chamber 220, a brake fluid in the second hydraulic chamber 220 is extruded through the interface 200a, and a brake fluid in a pipeline connected to the interface 200c flows into the first hydraulic chamber 210.

In other words, in the bidirectional pressure building process, the two hydraulic chambers communicate with each other, and the hydraulic chamber may also be replenished with a fluid through an interface.

With reference to the first aspect, in some not claimed implementations of the first aspect, the interface 200d is connected to a fluid storage apparatus 100, the interface 200c is connected to a second end of a first one-way valve 901, and a first end of the first one-way valve 901 is connected to the fluid storage apparatus 100; when the piston 240 moves toward the first hydraulic chamber 210, a brake fluid in the fluid storage apparatus 100 flows into the second hydraulic chamber 220 through the interface 200d; and when the piston 240 moves toward the second hydraulic chamber 220, the brake fluid in the fluid storage apparatus 100 passes through the first one-way valve 901, and then flows into the first hydraulic chamber 210 through the interface 200c.

It should be understood that the fluid storage apparatus 100 is not a constituent part of the brake control apparatus 1000, but merely provides a brake fluid to an entire brake control system and/or recycles a brake fluid from the entire brake control system.

According to a second aspect according to the invention, the invention provides also a brake control system is provided, including a brake control apparatus 1000, a fluid storage apparatus 100, a braking circuit 410, and a braking circuit 420. The brake control apparatus 1000 may be any brake control apparatus in the first aspect. For brevity, details are not described again. A hydraulic cylinder 200 further includes an interface 200a, an interface 200b, an interface 200c, and an interface 200d, the interface 200a and the interface 200d are disposed on an outer wall of the hydraulic cylinder 200 in which a second hydraulic chamber 220 is located, the interface 200b and the interface 200c are disposed on the outer wall of the hydraulic cylinder 200 in which a first hydraulic chamber 210 is located, the interface 200d is connected to the fluid storage apparatus 100, the interface 200c is connected to a second end of a first one-way valve 901, and a first end of the first one-way valve 901 is connected to the fluid storage apparatus 100.

With reference to the second aspect, in some implementations of the second aspect, a fourth valve is a fourth one-way valve 904; when a piston 240 moves toward the first hydraulic chamber 210, a first control valve 801, a second control valve 802, and a third control valve 803 are in an open state, and the first one-way valve 901 and the fourth one-way valve 904 are in a closed state; and when the piston 240 moves toward the second hydraulic chamber 220, the first control valve 801, the first one-way valve 901, and the fourth one-way valve 904 are in an open state, and the second control valve 802 and the third control valve 803 are in a closed state.

With reference to the second aspect, in some implementations of the second aspect, the fourth valve is a fourth control valve 804. When the piston 240 moves toward the first hydraulic chamber 210, the first control valve 801, the second control valve 802, the third control valve 803, and the fourth control valve 804 are in an open state, and the first one-way valve 901 is in a closed state; and when the piston 240 moves toward the second hydraulic chamber 220, the first control valve 801, the first one-way valve 901, and the fourth control valve 804 are in an open state, and the second control valve 802 and the third control valve 803 are in a closed state.

Optionally, the brake control system may further include a pedal feedback module 3000. The pedal feedback module 3000 is configured to provide pedal feeling feedback to a driver, and the pedal feedback module 3000 includes an eighth control valve 808, a second one-way valve 902, and a braking pedal feeling simulator 630.

With reference to the second aspect, in some further not claimed implementations of the second aspect, the brake control system may further include a braking pedal 620, a master cylinder 610, an eighth control valve 808, a second one-way valve 902, and a braking pedal feeling simulator 630; and the master cylinder 610 is connected to the fluid storage apparatus 100, the braking pedal 620 is connected to the master cylinder 610, a first end of the eighth control valve 808 is connected to the master cylinder 610, a second end of the eighth control valve 808 is connected to the braking pedal feeling simulator 630, a second end of the second one-way valve 902 is connected to the master cylinder 610, a first end of the second one-way valve 902 is connected to the braking pedal feeling simulator 630, and when the second one-way valve 902 is in an open state, a brake fluid flows from the first end of the second one-way valve 902 to the second end of the second one-way valve 902.

Optionally, but not claimed, the brake control system may further include a mechanical brake module 2000, and the mechanical brake module 2000 may include a braking pedal 620, a master cylinder 610, a fifth control valve 805, and a sixth control valve 806. When no power is supplied to the brake control apparatus 1000, or a fault occurs, or a mechanical braking mode is selected (in other words, when the brake control apparatus 1000 does not operate), the mechanical braking module 2000 may be used to implement brake control of a vehicle. The braking pedal 620 is connected to the master cylinder 610. After the driver depresses the pedal, the pedal moves forward, so that a piston in the master cylinder 610 moves forward, and hydraulic pressure in the master cylinder increases, to extrude a brake fluid in the master cylinder. The master cylinder 610 is respectively connected to the braking circuit 410 and the braking circuit 420 through the fifth control valve 805 and the sixth control valve 806. The fifth control valve 805 and the sixth control valve 806 each are a normally open control valve. In other words, the fifth control valve 805 and the sixth control valve 806 are closed when being powered up, and are open when not being powered up.

With reference to the second aspect, in some not claimed implementations of the second aspect, the brake control system further includes normally open control valves: a fifth control valve 805 and a sixth control valve 806, a first end of the fifth control valve 805 is connected to the master cylinder 610, a second end of the fifth control valve 805 is connected to the braking circuit 420, a first end of the sixth control valve 806 is connected to the master cylinder 610, and a second end of the sixth control valve 806 is connected to the braking circuit 410.

According to a third aspect according to the invention, the invention also provides a control method for a brake control system is provided. The brake control system may be any brake control system in the second aspect. For brevity, details are not described again.

The control method in the third aspect includes: obtaining a braking requirement; generating a control instruction based on the braking requirement, where the control instruction is used to control a driving apparatus 300; and sending the control instruction to the driving apparatus 300, so that the driving apparatus 300 drives, based on the control instruction, a push rod 230 to push a piston 240 to move along an inner wall of a hydraulic cylinder 200.

Alternatively but not claimed, the control method may be performed by a controller in an automobile.

Optionally but not claimed, the braking requirement such as required duration of a braking force or a required magnitude of a braking force may be generated by collecting a route of the pedal or pressure in the master cylinder.

Optionally but not claimed, the control instruction may include an operating parameter such as a diversion, a rotational speed, or torque that needs to be provided by the driving apparatus. In other words, the braking requirement is converted into the operating parameter of the driving apparatus 300.

Optionally but not claimed, the controller may control the driving apparatus 300 to operate based on the operating parameter such as the diversion, the rotational speed, or the torque in the control instruction, so that the piston 240 moves forward or backward, to provide a braking force for the vehicle.

With reference to the third aspect, in some implementations of the third aspect, a fourth valve is a fourth one-way valve 904, and the control instruction is specifically used to control the brake control system to perform at least one of the following operations:
during forward pressure building, the driving apparatus 300 pushes the piston 240 to move toward a first hydraulic chamber 210, to extrude a brake fluid in the first hydraulic chamber 210, a first control valve 801, a second control valve 802, and a third control valve 803 are in an open state, and a first one-way valve 901 and the fourth one-way valve 904 are in a closed state; and
during backward pressure building, the driving apparatus 300 pulls the piston 240 to move toward a second hydraulic chamber 220, the first control valve 801, the first one-way valve 901, and the fourth one-way valve 904 are in an open state, and the second control valve 802 and the third control valve 803 are in a closed state.

With reference to the third aspect, in some implementations of the third aspect, a fourth valve is a fourth control valve 804, and the control instruction is specifically used to control the brake control system to perform at least one of the following operations:
during forward pressure building, the driving apparatus 300 pushes the piston 240 to move toward a first hydraulic chamber 210, a first control valve 801, a second control valve 802, a third control valve 803, and the fourth control valve 804 are in an open state, and a first one-way valve 901 is in a closed state; and
during backward pressure building, the driving apparatus 300 pulls the piston 240 to move toward a second hydraulic chamber 220, the first control valve 801, the first one-way valve 901, and the fourth control valve 804 are in an open state, and the second control valve 802 and the third control valve 803 are in a closed state.

With reference to the third aspect, in some not claimed implementations of the third aspect, the controller may further determine the braking requirement based on a piston motion route in a master cylinder 610 or pressure in a master cylinder 610.

With reference to the third aspect, in some not claimed implementations of the third aspect, when a fault occurs, mechanical braking is performed. During mechanical brake control, a brake control apparatus 1000 stops operating, a braking pedal 620 drives piston motion in the master cylinder 610, to extrude a brake fluid in the master cylinder 610, and the extruded brake fluid separately flows to a braking circuit 420 through a fifth control valve 805 and flows to a braking circuit 410 through a sixth control valve 806.

According to a fourth aspect according to the invention, the invention provides a control apparatus is provided. The control apparatus includes a processing unit and a storage unit. The storage unit is configured to store instructions, and the processing unit executes the instructions stored in the storage unit, so that the control apparatus performs any possible method in the third aspect.

Optionally but not claimed, the control apparatus may be an independent controller in the automobile, or may be a chip having a control function in the automobile. The processing unit may be a processor, and the storage unit may be a memory. The memory may be a storage unit (for example, a register or a cache) in a chip, or may be a storage unit (for example, a read-only memory or a random access memory) located outside the chip in the automobile.

It should be noted that, in the controller, the memory is coupled to the processor. That the memory is coupled to the processor may be understood as follows: The memory is located inside the processor, or the memory is located outside the processor, to be independent of the processor.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### BRIEF DESCRIPTION OF DRAWINGS

FIG. 1 is a schematic diagram of a structure of a conventional brake control system having a bidirectional pressurization function;
FIG. 2 is a schematic diagram of a structure of a brake control apparatus according to an embodiment of this application;
FIG. 3 is a schematic diagram of a forward pressure building process according to an embodiment of this application;
FIG. 4 is a schematic diagram of a backward pressure building process according to an embodiment of this application;
FIG. 5 is a schematic diagram of a structure of a brake control apparatus according to an embodiment of this application;
FIG. 6 is a schematic diagram of a forward pressure building process according to an embodiment of this application;
FIG. 7 is a schematic diagram of a backward pressure building process according to an embodiment of this application;
FIG. 8 is a schematic diagram of a structure of a brake control system according to an embodiment of this application;
FIG. 9 is a schematic diagram of a forward pressure building process of a brake control system according to an embodiment of this application;
FIG. 10 is a schematic diagram of a backward pressure building process of a brake control system according to an embodiment of this application;
FIG. 11 is a schematic diagram of a mechanical braking process of a brake control system according to an embodiment of this application;
FIG. 12 is a schematic diagram of a depressurization process of a brake control system according to an embodiment of this application;
FIG. 13 is a schematic diagram of a brake control system according to an embodiment of this application;
FIG. 14 is a schematic flowchart of a brake control method according to an embodiment of this application;
FIG. 15 is a flowchart of a brake control method according to an embodiment of this application;
FIG. 16 is a schematic diagram of a control apparatus according to an embodiment of this application; and
FIG. 17 is a schematic block diagram of a control apparatus according to an embodiment of this application.

### DESCRIPTION OF EMBODIMENTS

The following describes the technical solutions in this application with reference to the accompanying drawings.

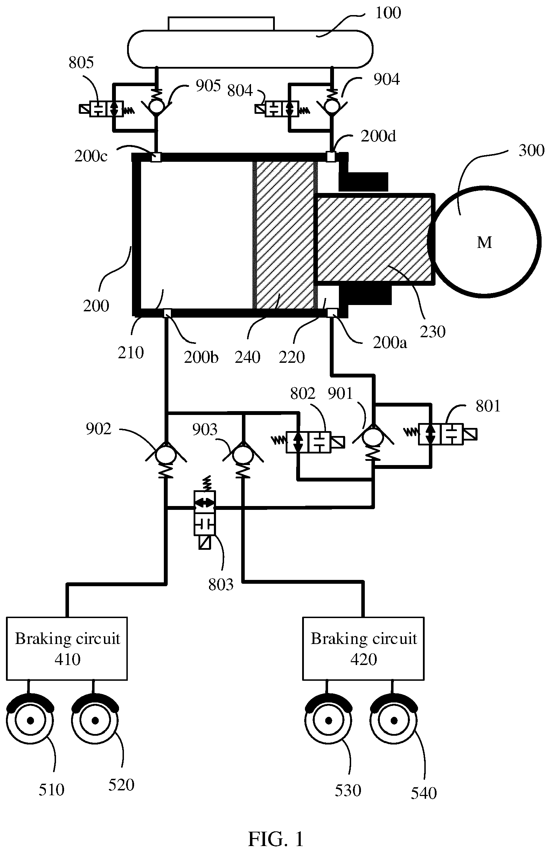

FIG. 1 is a schematic diagram of a structure of a conventional brake control system having a bidirectional pressurization function. The brake control system shown in FIG. 1 includes a driving apparatus 300, a braking circuit 410, a braking circuit 420, a fluid storage apparatus 100, a hydraulic cylinder 200, a piston 240, a push rod 230, a second hydraulic chamber 220, a first hydraulic chamber 210, an interface 200a and an interface 200d of the second hydraulic chamber 220, an interface 200c and an interface 200b of the first hydraulic chamber 210, and several control valves and one-way valves.

The braking circuit 410 is configured to provide a braking force to a wheel 510 and a wheel 520, and the braking circuit 420 is configured to provide a braking force to a wheel 530 and a wheel 540.

As shown in FIG. 1, the driving apparatus 300 is configured to drive the push rod 230 to push the piston 240 to move along an inner wall of the hydraulic cylinder 200, and the hydraulic cylinder 200 is divided by the piston 240 into two hydraulic chambers: the second hydraulic chamber 220 and the first hydraulic chamber 210. The second hydraulic chamber 220 may be referred to as a rear chamber, and the first hydraulic chamber 210 may be referred to as a front chamber. When the piston 240 advances from right to left, pressure in the front chamber increases. This is called forward pressure building. When the piston 240 backs from left to right, pressure in the rear chamber increases. This is called backward pressure building.

When a brake control apparatus is in a bidirectional pressurization mode, a fourth control valve 804 and a fifth control valve 805 are in a closed state, and a brake fluid in the fluid storage apparatus 100 may respectively flow to the second hydraulic chamber 220 and the first hydraulic chamber 210 through pipelines in which two one-way valves (a one-way valve 904 and a one-way valve 905) are located, to replenish the two hydraulic chambers with a fluid.

During forward pressure building, a first control valve 801 and a first one-way valve 901 are closed, to prevent a brake fluid in the first hydraulic chamber 210 from flowing to the second hydraulic chamber 220. Driven by the driving apparatus 300, the piston 240 moves from right to left along the inner wall of the hydraulic cylinder 200, so that the brake fluid in the first hydraulic chamber 210 is extruded from the hydraulic cylinder 200 (specifically, the first hydraulic chamber 210) through the interface 200b, and respectively flows into the braking circuit 410 and the braking circuit 420 through a second one-way valve 902 and a third one-way valve 903, to provide braking forces to the wheels.

During backward pressure building, a second control valve 802, a second one-way valve 902, and a third one-way valve 903 are all closed, to prevent a brake fluid in the second hydraulic chamber 220 from flowing into the first hydraulic chamber 210. Driven by the driving apparatus 300, the piston 240 moves from left to right along the inner wall of the hydraulic cylinder 200, so that the brake fluid in the second hydraulic chamber 220 is extruded from the hydraulic cylinder 200 (specifically, the second hydraulic chamber 220) through the interface 200a, is divided into two paths after passing through a first one-way valve 901 and a first control valve 801, and then flows into the braking circuits. One path does not directly flow into the braking circuit 420, and the other path flows into the braking circuit 410 through a third control valve 803, to provide braking forces to the wheels.

The third control valve 803 mainly performs a balancing function, so that brake fluids flowing to the two braking circuits generate same pressure. Therefore, the third control valve 803 is open in both a forward pressure building process and a backward pressure building process.

It can be learned from FIG. 1 that the second hydraulic chamber 220 and the first hydraulic chamber 210 need to be separately used for pressure building. To be specific, when the brake fluid in the first hydraulic chamber 210 is used for pressure building, it is necessary to prevent the brake fluid in the first hydraulic chamber 210 from flowing into the second hydraulic chamber 220, and when the brake fluid in the second hydraulic chamber 220 is used for pressure building, it is necessary to prevent the brake fluid in the second hydraulic chamber 220 from flowing into the first hydraulic chamber 210, to ensure that a brake fluid only flows into a braking circuit.

In FIG. 1, during switching between forward pressure building and backward pressure building, there needs to be same pressure in the two hydraulic chambers, and then pressure can be continuously increased based on the same pressure, so that the pressure cannot rise or even decreases for a period of time. In other words, pressure building is delayed. In actual driving, it is equivalent to that braking can be continued only after being stopped for a period of time midway through the braking. Consequently, a braking effect is seriously affected, and there is also a potential safety hazard.

To avoid the foregoing problem, an embodiment of this application provides a new brake control apparatus. In other words, a second hydraulic chamber 220 and a first hydraulic chamber 210 may communicate with each other, so that there is same pressure in the two hydraulic chambers or a small pressure difference. Therefore, seamless switching can be implemented during switching between forward pressure building and backward pressure building. In other words, there is no delay in switching of bidirectional pressure building, to provide a continuous and stable braking force, and improve brake control quality. In addition, a special valve arrangement and a connection manner are used, so that when the second hydraulic chamber 220 and the first hydraulic chamber 210 may communicate with each other, it can be further ensured that each circuit is controlled by an independent valve, and even if any one of the valves becomes faulty, it can still be ensured that at least one braking circuit can operate properly.

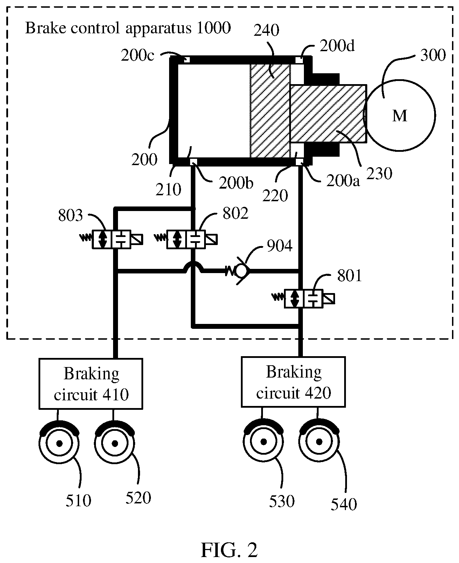

FIG. 2 is a schematic diagram of a structure of a brake control apparatus according to an embodiment of this application. A brake control apparatus 1000 shown in FIG. 2 includes a hydraulic cylinder 200, a push rod 230, a piston 240, a driving apparatus 300, a first control valve 801, a second control valve 802, a third control valve 803, and a fourth valve. The fourth valve is a fourth one-way valve 904 or a fourth control valve 804. The piston 240 is movable, and is disposed in the hydraulic cylinder 200, to divide the hydraulic cylinder 200 into a first hydraulic chamber 210 and a second hydraulic chamber 220. One end of the push rod 230 stretches into the hydraulic cylinder 200 and is connected to the piston 240, and the other end of the push rod 230 passes through the hydraulic cylinder 200 and is connected to the driving apparatus 300 in a driving manner. Driven by the driving apparatus 300, the piston 240 can perform reciprocating motion in the hydraulic cylinder 200, so that volumes of the two hydraulic chambers can be changed.

It should be noted that, the fourth valve may be a one-way valve or a control valve. The one-way valve supports only a one-way flow. In this embodiment of this application, one end that is of the one-way valve and that is first passed through along a flow direction is referred to as a first end, and one end that is later passed through is referred to as a second end. In other words, in this embodiment of this application, when the one-way valve is used, a brake fluid can only flow from the first end of the one-way valve to the second end, but cannot flow from the second end to the first end. However, it should be understood that this is only for ease of understanding. Names of the first end and the second end are not limited. In other words, a description that the brake fluid can only flow from the second end to the first end may alternatively be provided. The fourth valve shown in FIG. 2 is the fourth one-way valve 904. The fourth one-way valve 904 may be used to allow the brake fluid to flow from the second hydraulic chamber 220 in a direction to the first hydraulic chamber 210 and a braking circuit, in other words, allow the brake fluid to flow from right to left in a pipeline in which the fourth one-way valve 904 shown in FIG. 2 is located. In addition, when the fourth one-way valve 904 is used, the brake fluid cannot flow from the first hydraulic chamber 210 to the second hydraulic chamber 220, in other words, the brake fluid cannot flow from left to right in the pipeline in which the fourth one-way valve 904 shown in FIG. 2 is located.

The second hydraulic chamber 220 and the first hydraulic chamber 210 are separated by the piston 240, and it is configured that the volumes of the second hydraulic chamber 220 and the first hydraulic chamber 210 change as the piston 240 moves. As the piston 240 moves toward the first hydraulic chamber 210 (namely, in a forward direction or a right-to-left direction shown in FIG. 2), a volume of the second hydraulic chamber 220 increases and hydraulic pressure decreases; and a volume of the first hydraulic chamber 210 decreases and hydraulic pressure increases. As the piston 240 moves toward the second hydraulic chamber 220 (namely, in a backward direction or a left-to-right direction shown in FIG. 2), the volume of the second hydraulic chamber 220 decreases, and the volume of the first hydraulic chamber 210 increases.

The braking circuit is used to provide a braking force to a wheel. For example, a braking circuit 410 may provide a braking force to a wheel 510 and a wheel 520, and a braking circuit 420 may provide a braking force to a wheel 530 and a wheel 540. Specifically, the braking circuit directs the brake fluid to flow to a brake wheel cylinder (not shown in the figure) at a wheel, to provide pressure to the wheel through the brake wheel cylinder. The brake wheel cylinder may be considered a constituent part of the braking circuit.

Optionally, the braking circuit may have different forms of arrangements, for example, may have an X-shaped arrangement, an H-shaped arrangement, or an I-shaped arrangement.

The X-shaped arrangement may be understood as a diagonal arrangement. For example, the braking circuit 410 is connected to a left front wheel and a right rear wheel, and the braking circuit 420 is connected to a right front wheel and a left rear wheel. It is equivalent to that the wheel 510 and the wheel 520 shown in FIG. 2 are respectively the left front wheel and the right rear wheel, and the wheel 530 and the wheel 540 are respectively the right front wheel and the left rear wheel. For another example, the braking circuit 420 is connected to a left front wheel and a right rear wheel, and the braking circuit 410 is connected to a right front wheel and a left rear wheel. It is equivalent to that the wheel 530 and the wheel 540 in FIG. 2 are respectively the left front wheel and the right rear wheel, and the wheel 510 and the wheel 520 are respectively the right front wheel and the left rear wheel. It should be understood that the braking circuit 410 and the braking circuit 420 only need to be respectively connected to wheels on two diagonals, but a correspondence between each wheel in the figure and an actual wheel is not specifically limited. For example, the wheel 510 may correspond to the left front wheel, and the wheel 520 may correspond to the right rear wheel; or the wheel 520 may correspond to the left front wheel, and the wheel 510 may correspond to the right rear wheel. Correspondences are not listed one by one herein.

The H-shaped arrangement may be understood as an arrangement parallel to a vehicle side. For example, the braking circuit 410 is connected to a left front wheel and a left rear wheel, and the braking circuit 420 is connected to a right front wheel and a right rear wheel. It is equivalent to that the wheel 510 and the wheel 520 shown in FIG. 2 are respectively the left front wheel and the left rear wheel, and the wheel 530 and the wheel 540 are respectively the right front wheel and the right rear wheel. For another example, the braking circuit 420 is connected to a left front wheel and a left rear wheel, and the braking circuit 410 is connected to a right front wheel and a right rear wheel. It is equivalent to that the wheel 530 and the wheel 540 in FIG. 2 are respectively the left front wheel and the left rear wheel, and the wheel 510 and the wheel 520 are respectively the right front wheel and the right rear wheel. It should be understood that the braking circuit 410 and the braking circuit 420 only need to be respectively connected to wheels (wheels on a same side) parallel to the vehicle side, but a correspondence between each wheel in the figure and an actual wheel is not specifically limited. For example, the wheel 510 may correspond to the left front wheel, and the wheel 520 may correspond to the left rear wheel; or the wheel 520 may correspond to the left front wheel, and the wheel 510 may correspond to the left rear wheel. Correspondences are not listed one by one herein.

The I-shaped arrangement may be understood as follows: Front wheels form a group, and rear wheels form a group. For example, the braking circuit 410 is connected to a left front wheel and a right front wheel, and the braking circuit 420 is connected to a left rear wheel and a right rear wheel. It is equivalent to that the wheel 510 and the wheel 520 shown in FIG. 2 are respectively the left front wheel and the right front wheel, and the wheel 530 and the wheel 540 are respectively the left rear wheel and the right rear wheel. For another example, the braking circuit 420 is connected to a left front wheel and a right front wheel, and the braking circuit 410 is connected to a left rear wheel and a right rear wheel. It is equivalent to that the wheel 530 and the wheel 540 in FIG. 2 are respectively the left front wheel and the right front wheel, and the wheel 510 and the wheel 520 are respectively the left rear wheel and the right rear wheel. It should be understood that the braking circuit 410 and the braking circuit 420 only need to be separately connected to front wheels or separately connected to rear wheels, but a correspondence between each wheel in the figure and an actual wheel is not specifically limited. For example, the wheel 510 may correspond to the left front wheel, and the wheel 520 may correspond to the right front wheel; or the wheel 520 may correspond to the left front wheel, and the wheel 510 may correspond to the right front wheel. Correspondences are not listed one by one herein.

It should be further noted that when the vehicle has more than four wheels, the foregoing arrangements can also be used, but each braking circuit may include a different quantity of wheels. A repeated explanation is not provided. Actually, the H-shaped arrangement or the X-shaped arrangement is usually used as a common brake arrangement, and the X-shaped arrangement provides higher safety.

A first end of the first control valve 801 is connected to the second hydraulic chamber 220, the first end of the first control valve 801 is further connected to a first end of the fourth valve, a second end of the first control valve 801 is connected to the braking circuit 420, the second end of the first control valve 801 is further connected to a first end of the second control valve 802, a second end of the second control valve 802 is connected to the first hydraulic chamber 210, the second end of the second control valve 802 is further connected to a first end of the third control valve 803, a second end of the third control valve 803 is connected to the braking circuit 410, and the second end of the third control valve 803 is further connected to a second end of the fourth valve.

Opening/closing states of the first control valve 801, the second control valve 802, the third control valve 803, and the fourth valve may be controlled, to allow the first hydraulic chamber 210 to communicate with the second hydraulic chamber 220 when the piston 240 moves toward the first hydraulic chamber 210, and to prevent the first hydraulic chamber 210 from communicating with the second hydraulic chamber 220 when the piston 240 moves toward the second hydraulic chamber 220.

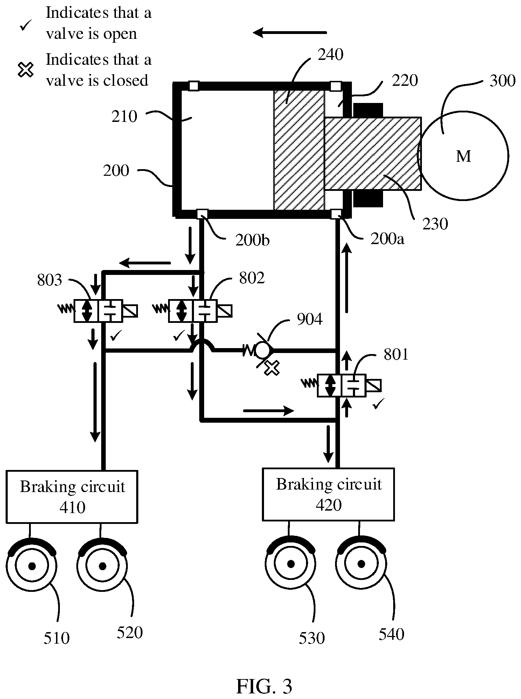

During forward pressure building, the piston 240 moves from right to left, to extrude a brake fluid in the first hydraulic chamber 210. The extruded brake fluid flows to the braking circuit 420 through the second control valve 802, and flows to the braking circuit 410 through the third control valve 803. In addition, after the brake fluid passes through the second control valve 802, a part of the brake fluid may flow to the second hydraulic chamber 220 through the first control valve 801. A communicating circuit is formed between the second hydraulic chamber 220 and the first hydraulic chamber 210. Specifically, the second hydraulic chamber 220 and the first hydraulic chamber 210 communicate with each other through the first control valve 801 and the second control valve 802. For a detailed process, refer to content in FIG. 3.

During forward pressure building, an effective action area of the piston 240 is a cross-sectional area of the push rod 230 in a movement direction of the piston 240.

During backward pressure building, the piston 240 moves from left to right, to extrude a brake fluid in the second hydraulic chamber 220. The extruded brake fluid flows to the braking circuit 420 through the first control valve 801, and flows to the braking circuit 410 through the fourth valve. For a detailed process, refer to content in FIG. 3.

During forward pressure building, an effective action area of the piston 240 is obtained by subtracting a cross-sectional area of the piston 240 in a movement direction from a cross-sectional area of the push rod 230 in the movement direction of the piston 240.

It can be learned that there is same pressure in the two hydraulic chambers, switching between forward pressure building and backward pressure building may be seamlessly performed, and there is further a small difference between effective action areas of bidirectional pressure building. Therefore, there is a small change in a pressurization rate existing during bidirectional pressure building. It is equivalent to that there is a small difference between rates of extruding the brake fluid. Therefore, the difference between the rates existing before and after switching is reduced.

It should be noted that, in a conventional pressure building manner, in either a low pressure mode or a high pressure mode, a pressure difference between the two hydraulic chambers increases as the piston advances. Therefore, the driving apparatus needs to continuously increase a force applied to the piston, to perform continuous pressure building. However, in this embodiment of this application, in a forward pressure building process, the two hydraulic chambers communicate with each other, and there is same pressure or a small pressure difference. Therefore, pressure building can be continuously performed without a need to apply a too strong force by the driving apparatus. In addition, when the two hydraulic chambers communicate with each other, it is equivalent to that pressure in the second hydraulic chamber always remains similar to pressure in a static state. Therefore, pressure in the first hydraulic chamber only needs to be slightly higher than the pressure in the static state. In a backward pressure building process, although the two hydraulic chambers do not communicate with each other, a brake fluid in the first hydraulic chamber can be replenished in a timely manner. Therefore, when forward pressure building is performed again through switching, pressure in the second hydraulic chamber is higher than pressure in the first hydraulic chamber, a force for pushing the piston to move toward the first hydraulic chamber is reduced, and a brake fluid can be extruded immediately from the first hydraulic chamber without a delay. It can be understood that, in this embodiment of this application, when a same braking requirement is met, maximum pressure achieved in a hydraulic chamber is slightly lower than pressure in the conventional bidirectional pressure building. Therefore, there are lower parameter requirements such as process requirements and/or configurations of the hydraulic cylinder and the driving apparatus, an outer wall of the hydraulic cylinder 200 and the piston 240 need to withstand a lower maximum pressure, and the driving apparatus 300 also needs to provide a weaker driving force.

The brake control apparatus 1000 shown in FIG. 2 may perform bidirectional pressure building, so that a brake fluid can flow to a braking circuit, to provide a braking force for the vehicle, and each valve and a connection manner of the valve are provided, so that the second hydraulic chamber 220 and the first hydraulic chamber 210 communicate with each other. There is always equal hydraulic pressure in the second hydraulic chamber 220 and the first hydraulic chamber 210 or a very small pressure difference, to implement seamless switching between forward pressure building and backward pressure building, and better meet a braking requirement of the vehicle.

In addition, during forward pressure building, the brake fluid flows to the two braking circuits through the second control valve 802 and the third control valve 803, and the first control valve 801 is used to introduce a part of the brake fluid into the second hydraulic chamber 220; and during backward pressure building, the brake fluid flows to the two braking circuits through the first control valve 801 and a fourth one-way valve 904. It is equivalent to that the first control valve 801 separately plays two functions in a bidirectional pressure building process: One is to control flowing of the brake fluid flowing to the braking circuit, and the other is to control flowing of the brake fluid flowing to the second hydraulic chamber 220, to effectively reduce a quantity of valves. However, opening and closing of each braking circuit are controlled by using an independent valve. Even if one of the valves is damaged, the other braking circuit may be used to implement brake control. It is equivalent to ensuring that even if some valves are damaged, at least one braking circuit operates normally, to improve safety. It is equivalent to ensuring a safety requirement and reducing the quantity of valves as much as possible.

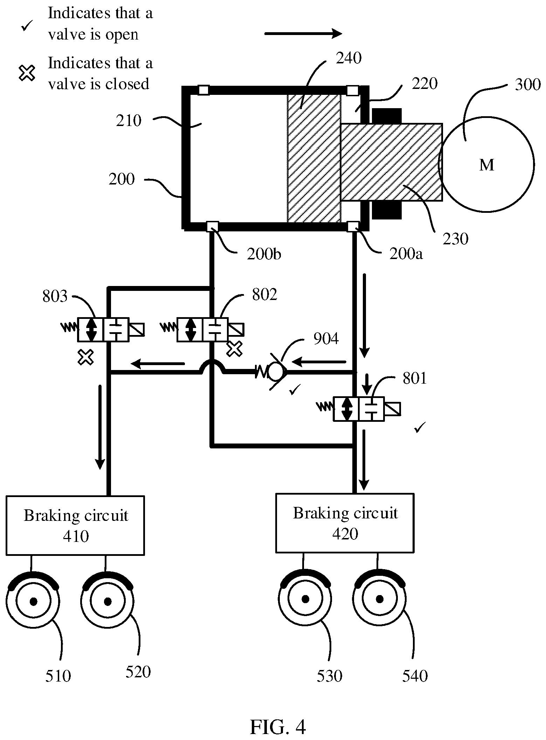

The following separately describes a forward pressure building process and a backward pressure building process with reference to FIG. 3 and FIG. 4.

FIG. 3 is a schematic diagram of a forward pressure building process according to an embodiment of this application. As shown in FIG. 3, a movement direction of a piston and a flow direction of a brake fluid in the forward pressure building process are provided.

As shown in FIG. 3, in the forward pressure building process, a driving apparatus 300 drives, by using a push rod 230, a piston 240 to move from right to left (toward a first hydraulic chamber 210), so that a volume of the first hydraulic chamber 210 is reduced and hydraulic pressure is increased, and a volume of a second hydraulic chamber 220 is increased and hydraulic pressure is reduced. The brake fluid is extruded through an interface 200b of the first hydraulic chamber 210, and the brake fluid flowing out of the first hydraulic chamber 210 is divided into a first path and a second path. The first path flows to a braking circuit 410 through a third control valve 803, and the second path is further divided into a third path and a fourth path after flowing through a second control valve 802. The third path flows to a braking circuit 420, and the fourth path flows to the second hydraulic chamber 220 through a first control valve 801, and flows into the second hydraulic chamber 220 through an interface 200a of the second hydraulic chamber 220.

In the forward pressure building process, the first control valve 801, the second control valve 802, and the third control valve 803 are all powered on and are in an open state. In other words, the brake fluid can flow through the three valves. However, a fourth valve in FIG. 3 is a one-way valve, so that the brake fluid can only flow from the second hydraulic chamber 220 to the first hydraulic chamber 210 (in a right-to-left direction of a fourth one-way valve 904 in FIG. 3). Therefore, during forward pressure building, the fourth valve prevents the brake fluid from flowing to the second hydraulic chamber 220.

It should be noted that, in the forward pressure building process, in addition to a brake fluid that is from the first hydraulic chamber 210 and that flows into the second hydraulic chamber 220 through the interface 200a, a brake fluid in the second hydraulic chamber 220 further includes a brake fluid obtained from a fluid storage apparatus (for example, a fluid storage apparatus 100) or another apparatus through an interface 200d. Because the two hydraulic chambers communicate with each other, there is always equal pressure in the two hydraulic chambers or a very small pressure difference.

FIG. 4 is a schematic diagram of a backward pressure building process according to an embodiment of this application. As shown in FIG. 4, a movement direction of a piston and a flow direction of a brake fluid in the backward pressure building process are provided.

As shown in FIG. 4, in the backward pressure building process, a driving apparatus 300 drives, by using a push rod 230, a piston 240 to move from left to right (toward a second hydraulic chamber 220), to extrude a brake fluid through an interface 200a of the second hydraulic chamber 220. The extruded brake fluid is divided into a fifth path and a sixth path. The fifth path flows to a braking circuit 410 through a fourth valve (a fourth one-way valve 904 in FIG. 4), and the sixth path flows to a braking circuit 420 through a first control valve 801. In the backward pressure building process, two hydraulic chambers do not communicate with each other, and the first hydraulic chamber 210 may be replenished with a fluid through an interface 200c of a first hydraulic chamber 210.

In the backward pressure building process, the first control valve 801 is powered on and is in an open state; but a second control valve 802 and a third control valve 803 are powered off and are in a closed state. To be specific, the brake fluid can flow through the first control valve 801, but cannot flow through the second control valve 802 and the third control valve 803. However, the fourth valve in FIG. 4 is a one-way valve, so that the brake fluid can only flow from the second hydraulic chamber 220 to the first hydraulic chamber 210 (in a right-to-left direction of the fourth one-way valve 904 in FIG. 4). Therefore, during backward pressure building, the fourth valve is open, so that the brake fluid flows to the braking circuit 420.

It should be noted that, in a bidirectional pressure building process, due to existence of the push rod and a route limitation, a quantity of brake fluids in the second hydraulic chamber 220 is usually less than a quantity of brake fluids in the first hydraulic chamber 210. In addition, a brake fluid already exists in a pipeline, and there is a specific pressure value. Therefore, if the two hydraulic chambers still communicate with each other during backward pressure building, it is equivalent to dividing a small quantity of brake fluids again. A part of the brake fluid flows back to the first hydraulic chamber, and a part of the brake fluid is left to the braking circuit. This greatly reduces a period of action time of backward pressure building. It is equivalent to increasing a switching frequency of bidirectional pressure building. Therefore, in this embodiment of this application, during backward pressure building, when the second control valve 802 and the third control valve 803 are closed, the brake fluid can only flow to the braking circuit, but cannot flow to the first hydraulic chamber 210. Such an operation can be used to effectively improve a braking effect. The first hydraulic chamber 210 may be replenished with a fluid through the interface 200c.

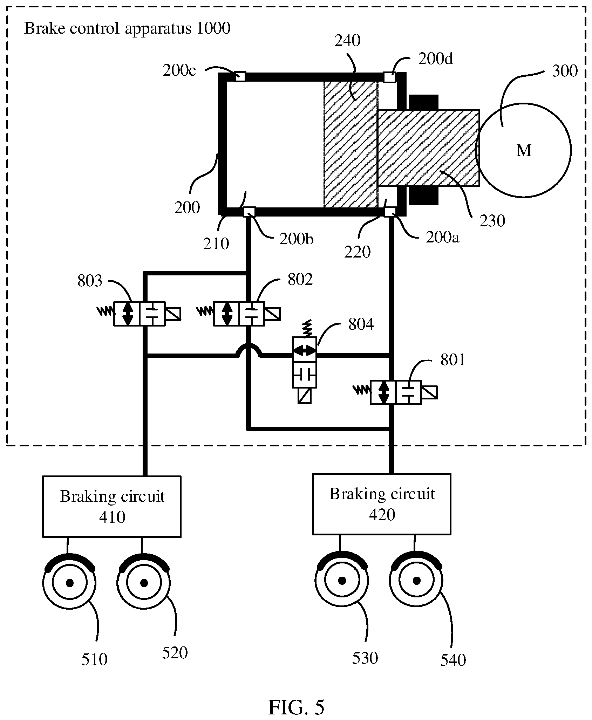

In the foregoing, it is mentioned that the fourth valve may be a one-way valve or a control valve, and FIG. 5 to FIG. 7 show a case in which the fourth valve is a fourth control valve 804. The following separately describes a case in which the fourth valve is a one-way valve and a case in which the fourth valve is a control valve. However, because a difference between FIG. 5 and FIG. 2 only lies in a different fourth valve. For brevity, descriptions are properly omitted. For omitted content, refer to related content in FIG. 2 to FIG. 4.

It should be understood that, in this embodiment of this application, a brake control apparatus 1000 does not include a wheel, and the brake control apparatus 1000 may or may not include a braking circuit. It can be understood that, the brake control apparatus 1000 in this embodiment of this application may operate by being directly connected to an existing braking circuit, and an additional design is not required.

FIG. 5 is a schematic diagram of a structure of a brake control apparatus according to an embodiment of this application. A difference between FIG. 5 and FIG. 2 lies in that the fourth one-way valve 904 in FIG. 2 is replaced with a fourth control valve 804. In FIG. 5, a brake fluid may flow through the control valve 804 from left to right or from right to left.

In other words, a fourth valve shown in FIG. 5 is the fourth control valve 804. The fourth control valve 804 may be used to allow the brake fluid to flow from a second hydraulic chamber 220 in a direction to a first hydraulic chamber 210 and a braking circuit, in other words, allow the brake fluid to flow from right to left in a pipeline in which the fourth control valve 804 shown in FIG. 5 is located. In addition, the fourth control valve 804 may be used to allow the brake fluid to flow from the first hydraulic chamber 210 to the second hydraulic chamber 220, in other words, allow the brake fluid to flow from left to right in the pipeline in which the fourth control valve 804 shown in FIG. 5 is located.

A one-way valve may be considered as a mechanical valve, can be used without being powered on, and can only be passed through in one direction. A control valve may be considered as an electronic valve, can be used only after being powered up, and can be passed through in two directions. In a braking scenario, after the one-way valve is used for a long period of time, elasticity of a spring is damaged, so that the one-way valve slowly leaks oil, and it is difficult to detect. Therefore, a process requirement of the one-way valve is high. However, the control valve can be used only by controlling opening or closing of the control valve by powering on (powering up) or powering off the control valve, and can be passed through in two directions.

In addition, the control valve includes a normally closed control valve and a normally open control valve. It can be understood that the normally closed control valve is open when being powered on and is closed when being powered off. In other words, the normally closed control valve is open only when being powered up, so that a fluid can flow through the control valve. In a brake control apparatus 1000 shown in FIG. 2 to FIG. 7, each used control valve is a normally closed control valve. It can be understood that the normally open control valve is closed when being powered on and is open when being powered off. In other words, the normally open control valve is closed only when being powered up, to prevent a fluid from flowing through the control valve. In this embodiment of this application, normally open control valves such as a fifth control valve 805 and a sixth control valve 806 described below are used for mechanical braking. In other words, no power is supplied during mechanical braking, and the brake control apparatus 1000 cannot operate, but the brake fluid may still flow through the normally open control valve.

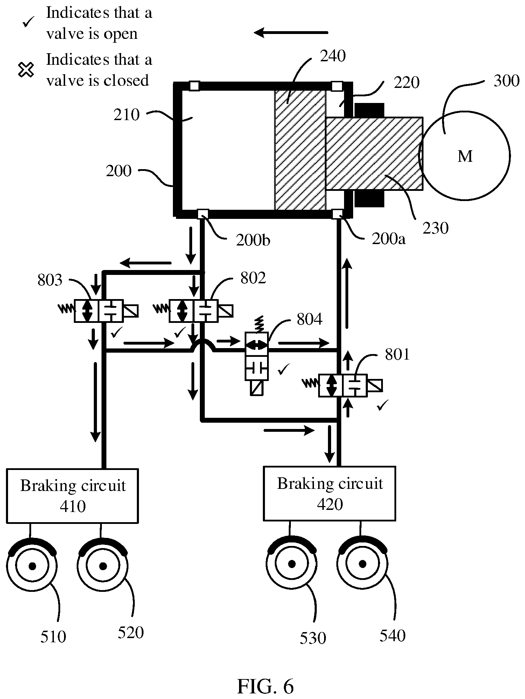

FIG. 6 is a schematic diagram of a forward pressure building process according to an embodiment of this application. As shown in FIG. 6, in the forward pressure building process, a piston 240 moves from right to left, and a brake fluid in a first hydraulic chamber 210 is extruded and flows out through an interface 200b. The extruded brake fluid is divided into a first path and a second path, and the first path is divided into a fifth path and a seventh path after passing through a third control valve 803. The fifth path flows into a second hydraulic chamber 220 through a fourth control valve 804 and an interface 200a, and the seventh path flows to a braking circuit 410. The second path is divided into a third path and a fourth path after passing through a second control valve 802. The third path flows to a braking circuit 420, and the fourth path flows into the second hydraulic chamber 220 through a first control valve and the interface 200a.

In FIG. 6, all shown control valves are powered-on and are in an open state. To be specific, the first control valve 801, the second control valve 802, the third control valve 803, and the fourth control valve 804 are all in an open state.

It can be learned that, in comparison with FIG. 3, in FIG. 6, there is an additional circuit, for example, the fifth path, flowing from the first hydraulic chamber 210 to the second hydraulic chamber 220, and a part of the brake fluid that passes through a third brake valve 113 flows into the second hydraulic chamber 220 through the fourth brake valve 804. In other words, a brake fluid flowing through the interface 200a includes two parts: One part flows through the fourth control valve 804, and the other part flows through the first control valve 801.

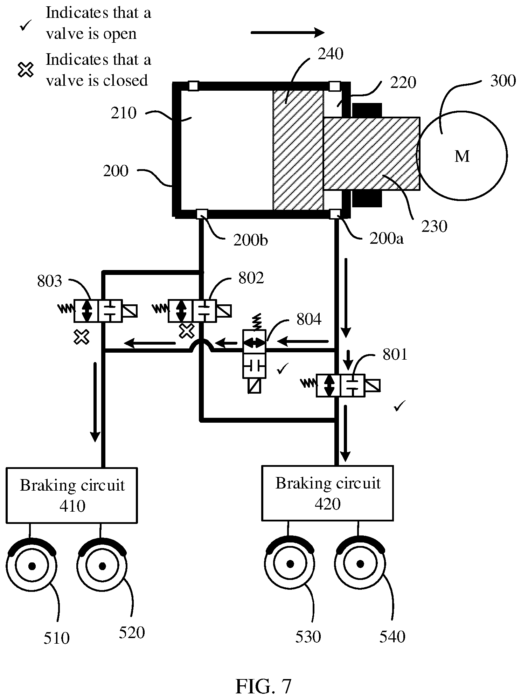

FIG. 7 is a schematic diagram of a backward pressure building process according to an embodiment of this application. As shown in FIG. 7, in the backward pressure building process, a piston 240 moves from left to right, and a brake fluid in a second hydraulic chamber 220 is extruded and flows out through an interface 200a. The extruded brake fluid is divided into two paths. One path flows to a braking circuit 410 after passing through a fourth control valve 804, and the other path flows to a braking circuit 420 after passing through a first control valve 801.

In FIG. 7, the first control valve 801 and the fourth control valve 804 are in an open state, and a second control valve 802 and a third control valve 803 are in a closed state.

It can be learned that, in FIG. 7, a flow direction of the brake fluid is the same as a flow direction of a brake fluid shown in FIG. 4, except that a fourth one-way valve 904 is replaced with the fourth control valve 804, and the brake fluid still flows through the fourth control valve 804 from right to left.

The foregoing mainly describes a structure of a brake control apparatus 1000 provided in this embodiment of this application and a pressure building process of the brake control apparatus 1000. A special valve disposing manner is mainly used to implement better brake control. When a solution in this embodiment of this application is used to perform pressure building, bidirectional pressure building can be seamlessly performed, a driving apparatus 300 does not need to provide too much power, and neither the piston nor a hydraulic chamber needs to withstand too much pressure. Therefore, a process requirement is significantly reduced.

In addition, in the solution in this embodiment of this application, a desired technical effect can be achieved only by improving a valve disposing and connection manner. In addition, a pressure resistance requirement of a used component is reduced. Therefore, an existing brake control apparatus can be directly improved or can be redesigned, to obtain a brake control apparatus. In addition, costs can be effectively reduced because a component with a low process requirement can be selected.

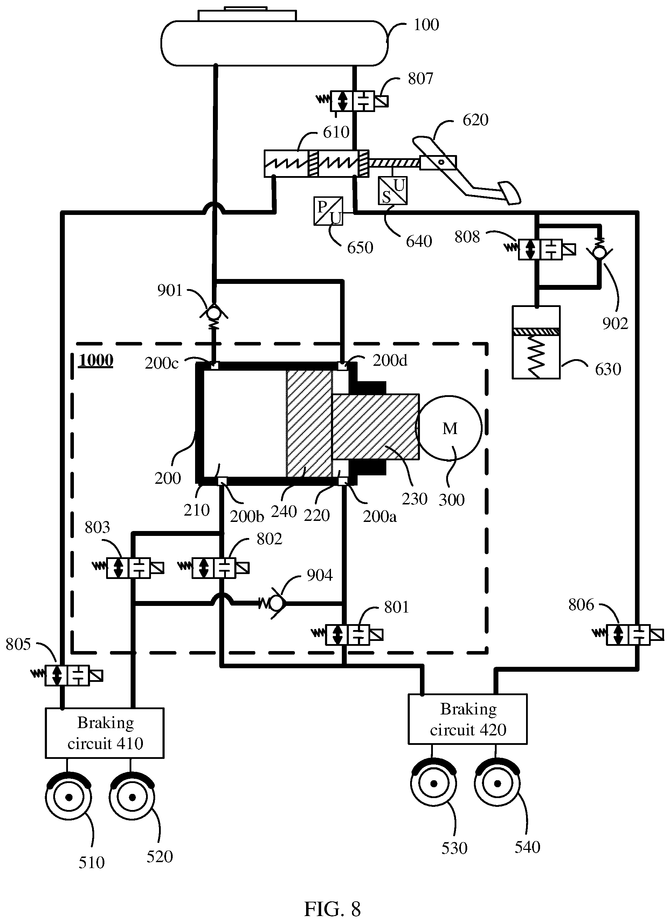

FIG. 8 is a schematic diagram of a structure of a brake control system according to an embodiment of this application. As shown in FIG. 8, the brake control system may include any brake control apparatus 1000 described above, a braking circuit 410, a braking circuit 420, and a fluid storage apparatus 100. The braking circuit 410 and the braking circuit 420 are connected to the brake control apparatus 1000, to provide a braking force to a wheel. The fluid storage apparatus 100 is used to replenish a hydraulic cylinder 200 in the brake control apparatus 1000 with a fluid.

Optionally, the brake control apparatus 1000 may be any brake control apparatus 1000 in FIG. 2 to FIG. 7. For brevity, details are not described again.

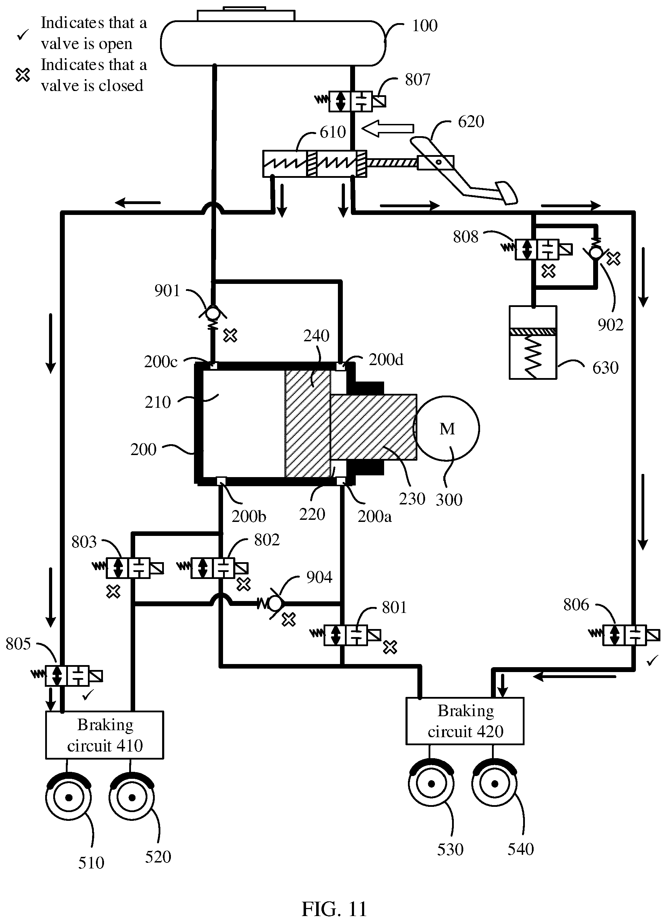

Optionally, the brake control system may further include a mechanical brake module 2000 (not shown in the figure), and the mechanical brake module 2000 may include a braking pedal 620, a master cylinder 610, a fifth control valve 805, and a sixth control valve 806. When no power is supplied to the brake control apparatus 1000, or a fault occurs, or a mechanical braking mode is selected (in other words, when the brake control apparatus 1000 does not operate), the mechanical braking module 2000 may be used to implement brake control of a vehicle. The braking pedal 620 is connected to the master cylinder 610. After a driver depresses the pedal, the pedal moves forward (moves in a right-to-left direction in FIG. 8), so that a piston in the master cylinder 610 moves forward (moves in a right-to-left direction in FIG. 8), and hydraulic pressure in the master cylinder increases, to extrude a brake fluid in the master cylinder. The master cylinder 610 is respectively connected to the braking circuit 410 and the braking circuit 420 through the fifth control valve 805 and the sixth control valve 806. The fifth control valve 805 and the sixth control valve 806 each are a normally open control valve. In other words, the fifth control valve 805 and the sixth control valve 806 are closed when being powered up, and are open when not being powered up. In the mechanical braking mode, a specific braking procedure is described in FIG. 11, and is not described herein.

Optionally, the brake control system may further include a pedal feedback module 3000 (not shown in the figure). The pedal feedback module 3000 is configured to provide pedal feeling feedback to the driver, and the pedal feedback module 3000 includes an eighth control valve 808, a second one-way valve 902, and a braking pedal feeling simulator 630.

Optionally, the fluid storage apparatus 100 may be further connected to the master cylinder 610 and/or the hydraulic cylinder 200 through a valve. For example, as shown in the figure, the fluid storage apparatus 100 is connected to the master cylinder 610 through a seventh control valve 807, and is configured to: replenish the master cylinder with a fluid or withdraw a brake fluid from the master cylinder. The fluid storage apparatus 100 is connected to an interface 200c of the hydraulic cylinder 200 through a one-way valve 901, to replenish a first hydraulic chamber 210 with a fluid. The fluid storage apparatus 100 is not directly connected to a second hydraulic chamber 220 through a valve, and may replenish the second hydraulic chamber 200 with a fluid during forward pressure building, or may withdraw a brake fluid from the second hydraulic chamber 200 during depressurization.

It should be understood that FIG. 8 shows merely an example of composition of the brake control system, and the brake control system may include all or only some of the foregoing apparatuses or components, provided that the brake control apparatus 1000 in this embodiment of this application can be included and a complete brake control process can be implemented.

It should be noted that, in the brake control system in this application, the mechanical braking mode (a manual braking mode) triggered by the driver by depressing the braking pedal, a brake-by-wire mode triggered by the driver by depressing the braking pedal, and an automated driving system braking mode in an autonomous driving scenario may be implemented. A principle of a braking process in the mechanical braking mode is similar to a principle of a braking process in a mechanical braking mode in an existing brake control system. For brevity, some content is omitted. This application mainly describes a bidirectional pressure building process of the brake control apparatus 1000 in the brake-by-wire mode and the automated driving system braking mode.

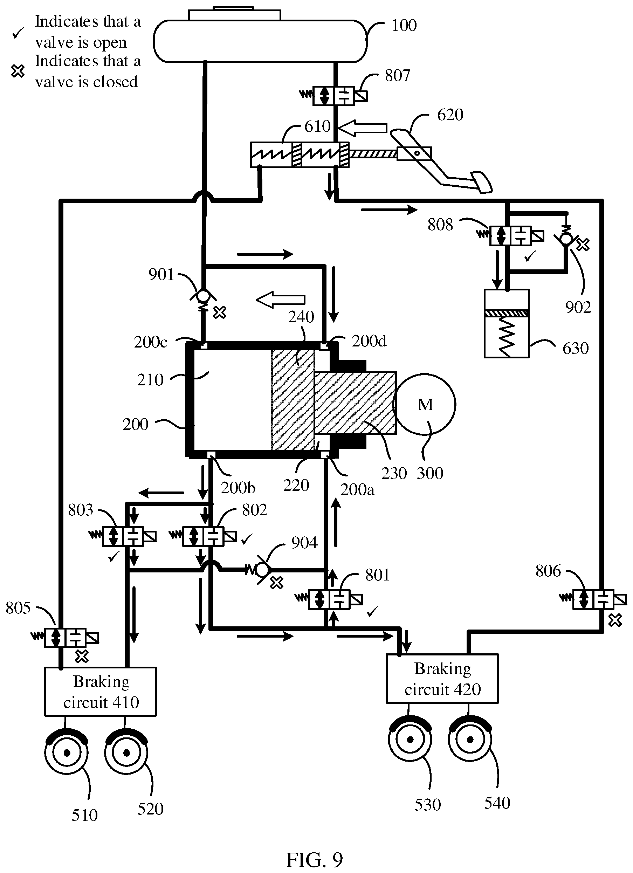

The driver depresses the braking pedal 620, so that a brake fluid in the braking master cylinder 610 flows into the pedal feeling simulator 630 through a braking pipeline in which the eighth control valve 808 is located. In the brake-by-wire mode, the fifth control valve 805 and the sixth control valve 806 are in a closed state. The brake control apparatus 1000 provides a braking force to the brake control system based on a pedal route detected by a pedal route sensor 640 or pressure that is of a brake fluid and that is detected by a pressure sensor 650. In the mechanical braking mode, the fifth control valve 805 and the sixth control valve 806 are in an open state, and the brake fluid is extruded from the master cylinder 610, is divided into two paths, and respectively flows to the braking circuit 410 and the braking circuit 420 through the fifth control valve 805 and the sixth control valve 806, to provide the braking force for the wheel. The bidirectional pressure building process and a mechanical braking process are separately described below with reference to FIG. 9 to FIG. 11.

FIG. 9 is a schematic diagram of a forward pressure building process of a brake control system according to an embodiment of this application. As shown in FIG. 9, a movement direction of a piston, a movement direction of a pedal, and a flow direction of a brake fluid in the forward pressure building process are provided.

As shown in FIG. 9, a braking pedal 620 drives piston motion (motion in a right-to-left direction in the figure) in a master cylinder 610, so that a brake fluid in the master cylinder 610 is extruded, and the brake fluid flows into a pedal feeling simulator 630 through a braking pipeline in which an eighth control valve 808 is located, to provide a pedal feedback.

In the forward pressure building process, a fifth control valve 805 and a sixth control valve 806 are in a closed state. A driving apparatus 300 drives, by using a push rod 230, a piston 240 to move toward a first hydraulic chamber 210 (in a right-to-left direction in FIG. 9), so that a volume of the first hydraulic chamber 210 is reduced and hydraulic pressure is increased, and a volume of a second hydraulic chamber 220 is increased and hydraulic pressure is reduced. A brake fluid is extruded from the first hydraulic chamber 210 and flows into a connected pipeline through an interface 200b, and a brake fluid in a fluid storage apparatus 100 flows into the second hydraulic chamber 220 through an interface 200d. The brake fluid flowing out of the first hydraulic chamber 210 is divided into a first path and a second path. The first path flows to a braking circuit 410 through a third control valve 803, and the second path is further divided into a third path and a fourth path after flowing through a second control valve 802. The third path flows to a braking circuit 420, and the fourth path flows to the second hydraulic chamber 220 through a first control valve 801, and flows into the second hydraulic chamber 220 through an interface 200a of the second hydraulic chamber 220.

In the forward pressure building process, the first control valve 801, the second control valve 802, and the third control valve 803 are all powered on and are in an open state. In other words, the brake fluid can flow through the three valves. A fourth valve may be a fourth one-way valve 904 (shown in FIG. 9) or a fourth control valve 804 (not shown in FIG. 9). When the fourth valve is a one-way valve, the brake fluid can only flow from the second hydraulic chamber 220 to the first hydraulic chamber 210 (in a right-to-left direction of the fourth one-way valve 904 in FIG. 9). Therefore, during forward pressure building, the fourth one-way valve 904 prevents the brake fluid from flowing to the second hydraulic chamber 220, so that only a brake fluid passing through the first control valve 801 flows into the second hydraulic chamber 220 through the interface 200a. It is equivalent to that there is a communicating circuit between the first hydraulic chamber 210 and the second hydraulic chamber 220. When the fourth valve is a control valve, in other words, the fourth one-way valve 904 in FIG. 9 is replaced with the fourth control valve 804, and the others remain unchanged, the brake fluid not only may flow from the second hydraulic chamber 220 to the first hydraulic chamber 210 (in a right-to-left direction in FIG. 9), but also may flow from the first hydraulic chamber 210 to the second hydraulic chamber 220 (in a left-to-right direction in FIG. 9). Therefore, during forward pressure building, a brake fluid passing through the fourth control valve 804 and a brake fluid passing through the first control valve 801 both flow to the second hydraulic chamber 220. It is equivalent to that there are two communicating circuits between the first hydraulic chamber 210 and the second hydraulic chamber 220.

It should be noted that, in the forward pressure building process, the fifth control valve 805 and the sixth control valve 806 are normally open control valves, and are in a closed state when being powered on, but the first control valve 801, the second control valve 802, and the third control valve 803 are normally closed control valves, and are in an open state when being powered on. When the fourth valve is the fourth control valve 804, the fourth control valve 804 is also a normally closed control valve, and is in an open state when being powered on.

Because the two hydraulic chambers communicate with each other, there is always equal pressure in the two hydraulic chambers or a very small pressure difference.

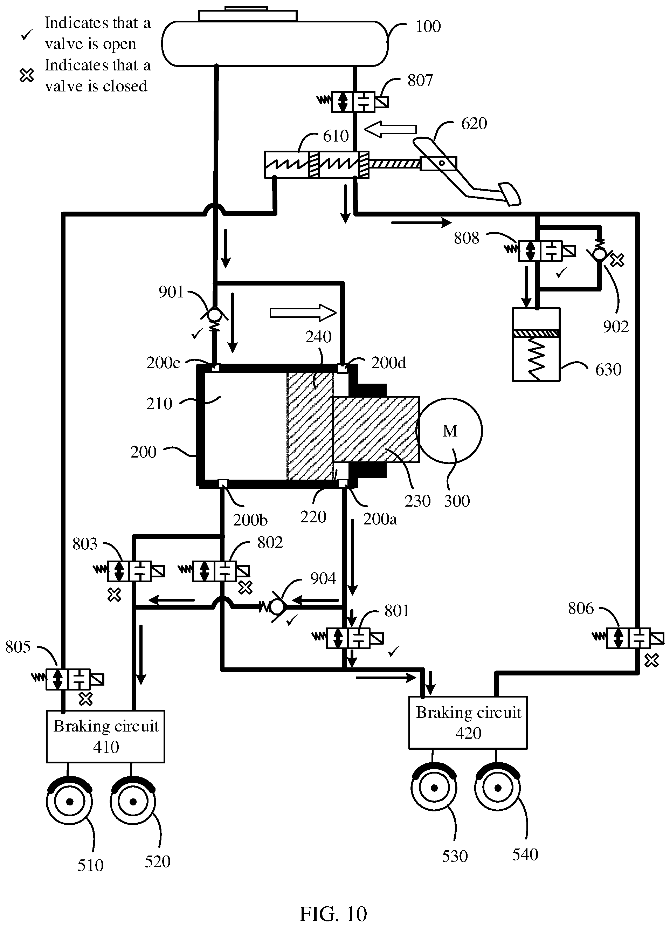

FIG. 10 is a schematic diagram of a backward pressure building process of a brake control system according to an embodiment of this application. As shown in FIG. 10, a movement direction of a piston, a movement direction of a pedal, and a flow direction of a brake fluid in the backward pressure building process are provided.

As shown in FIG. 10, a braking pedal 620 drives piston motion (motion in a right-to-left direction in the figure) in a master cylinder 610, so that a brake fluid in the master cylinder 610 is extruded, and the brake fluid flows into a pedal feeling simulator 630 through a braking pipeline in which an eighth control valve 808 is located, to provide a pedal feedback.

In the backward pressure building process, a driving apparatus 300 drives, by using a push rod 230, a piston 240 to move from left to right (toward a second hydraulic chamber 220), to extrude a brake fluid through an interface 200a of the second hydraulic chamber 220. The extruded brake fluid is divided into a fifth path and a sixth path. The fifth path flows to a braking circuit 410 through a fourth valve (the fourth valve is a fourth one-way valve 904 in FIG. 10), and the sixth path flows to a braking circuit 420 through a first control valve 801.

In the backward pressure building process, a first hydraulic chamber 210 may be replenished with a fluid through an interface 200c of the first hydraulic chamber 210. A brake fluid in a fluid storage apparatus 100 flows into the first hydraulic chamber 210 through a first one-way valve 901 and the interface 200c.

In the backward pressure building process, the first control valve 801 is powered on and is in an open state; but a second control valve 802 and a third control valve 803 are powered off and are in a closed state. In other words, the brake fluid can flow through the first control valve 801, but cannot flow through the second control valve 802 and the third control valve 803. The fourth valve may be the fourth one-way valve 904 (shown in FIG. 10) or a fourth control valve 804 (not shown in FIG. 10). When the fourth valve is a one-way valve, the brake fluid can only flow from the second hydraulic chamber 220 to the first hydraulic chamber 210 (in a right-to-left direction of the fourth one-way valve 904 in FIG. 10). Therefore, during backward pressure building, the fourth one-way valve 904 is open, so that the brake fluid flows to the braking circuit 410. When the fourth valve is a control valve, in other words, the fourth one-way valve 904 in FIG. 10 is replaced with the fourth control valve 804, and the others remain unchanged, the brake fluid not only may flow from the second hydraulic chamber 220 to the first hydraulic chamber 210 (in a right-to-left direction in FIG. 9), but also may flow from the first hydraulic chamber 210 to the second hydraulic chamber 220 (in a left-to-right direction in FIG. 9). Therefore, during backward pressure building, the fourth control valve 804 is powered on and is in an open state, so that the brake fluid flows to the braking circuit 410. In other words, flow directions of the brake fluid in two cases in which the fourth valve is a one-way valve or a control valve are completely the same.

It should be noted that, in the backward pressure building process, a fifth control valve 805 and a sixth control valve 806 are normally open control valves, and are in a closed state after being powered on. The first control valve 801, the second control valve 802, and the third control valve 803 are normally closed control valves. The second control valve 802 and the third control valve 803 are in a closed state when being powered off, and the first control valve 801 is in an open state when being powered on. When the fourth valve is the fourth control valve 804, the fourth control valve 804 is also a normally closed control valve, and is in an open state when being powered on.

FIG. 11 is a schematic diagram of a mechanical braking process of a brake control system according to an embodiment of this application. As shown in FIG. 11, neither a brake control apparatus 1000 nor a pedal feedback module 3000 operates in a mechanical braking mode.

As shown in FIG. 11, a fifth control valve 805 and a sixth control valve 806 are in an open state, and valves in the brake control apparatus 1000 and the pedal feedback module 3000 are in a closed state. A braking pedal 620 drives piston motion (motion in a right-to-left direction in the figure) in a master cylinder 610, so that a brake fluid in the master cylinder 610 is extruded, and the extruded brake fluid is divided into two paths. One path flows into a braking circuit 410 through the fifth control valve 805, and the other path flows into a braking circuit 420 through the sixth control valve 806.

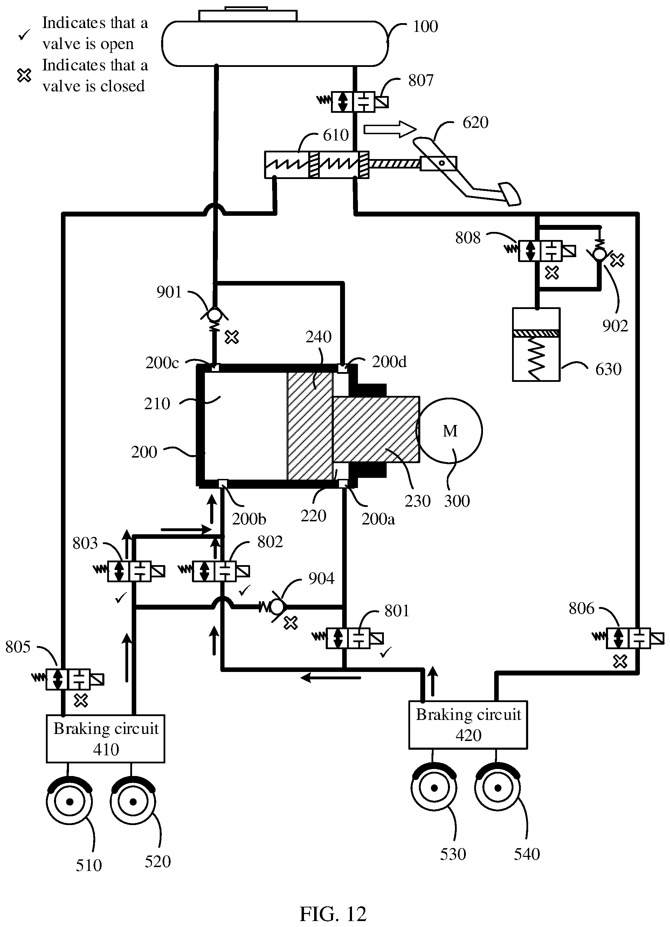

FIG. 12 is a schematic diagram of a depressurization process of a brake control system according to an embodiment of this application. The foregoing mainly describes a pressurization (pressure building) process. The following briefly describes, with reference to FIG. 12, how to recycle a brake fluid flowing out.

In the depressurization process, when a brake control apparatus 1000 is used for depressurization, a brake fluid in a braking circuit 410 may flow into a first hydraulic chamber 210 through a third control valve 803 and an interface 200b, as shown in FIG. 12. A brake fluid in a braking circuit 420 may flow into the first hydraulic chamber 210 through a second control valve 802 and the interface 200b, as shown in FIG. 12. The brake fluid in the braking circuit 420 may further flow into a second hydraulic chamber 220 through a first control valve 801 and an interface 200a (a flow direction is not marked in the figure). A brake fluid in the second hydraulic chamber 220 may further flow back to a fluid storage apparatus 100 through an interface 200d (a flow direction is not marked in the figure).

A brake fluid in a braking pedal feeling simulator 630 may flow into a master cylinder 610 through a second one-way valve 902.

The brake fluid in the braking circuit 410 may further flow into the master cylinder 610 through a fifth control valve 805 (a flow direction is not marked in the figure). The brake fluid in the braking circuit 420 may further flow into the master cylinder 610 through a sixth control valve 806 (a flow direction is not marked in the figure).

Optionally, the brake fluid in the braking circuit 410 may alternatively directly flow into the fluid storage apparatus 100 without passing through the master cylinder 610 (such a connection manner and flow direction are not shown in the figure).

With the foregoing disposing, all brake fluids can be recycled.

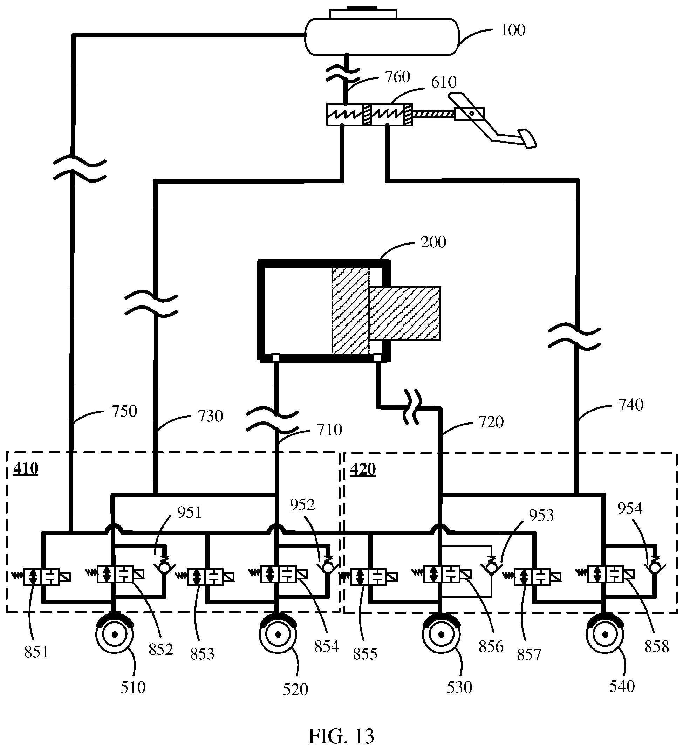

FIG. 13 is a schematic diagram of a brake control system according to an embodiment of this application. In FIG. 13, valve disposing in a braking circuit is mainly shown, but some other valves in the system, other modules, apparatuses, components, or the like are omitted, for example, a driving apparatus 300.

As shown in FIG. 13, a braking circuit 410 includes a control valve 851, a control valve 852, a control valve 853, a control valve 854, a one-way valve 951, and a one-way valve 952. The control valve 851, the control valve 852, and the one-way valve 951 are all connected to a wheel 510, and the control valve 853, the control valve 854, and the one-way valve 952 are all connected to a wheel 520. A braking circuit 420 includes a control valve 855, a control valve 856, a control valve 857, a control valve 858, a one-way valve 953, and a one-way valve 954. The control valve 855, the control valve 856, and the one-way valve 953 are all connected to a wheel 530, and the control valve 857, the control valve 858, and the one-way valve 954 are all connected to a wheel 540.

The control valve 852, the one-way valve 951, the control valve 854, and the one-way valve 952 are all connected to a brake control apparatus 1000 through a passage 710. In other words, it can be understood that the passage 710 is a pipeline that is of a brake fluid and that connects the braking circuit 410 and the brake control apparatus 1000. The control valve 856, the one-way valve 953, the control valve 858, and the one-way valve 954 are all connected to the brake control apparatus 1000 through a passage 720. In other words, it can be understood that the passage 720 is a pipeline that is of a brake fluid and that connects the braking circuit 420 and the brake control apparatus 1000.

The control valve 852, the one-way valve 951, the control valve 854, and the one-way valve 952 are all connected to a master cylinder 610 through a passage 730. In other words, it can be understood that the passage 730 is a pipeline that is of a brake fluid and that connects the braking circuit 410 and the master cylinder 610. The control valve 856, the one-way valve 953, the control valve 858, and the one-way valve 954 are all connected to a master cylinder 610 through a passage 740. In other words, it can be understood that the passage 740 is a pipeline that is of a brake fluid and that connects the braking circuit 420 and the master cylinder 610.

Optionally, a fifth control valve 805 may be disposed on the passage 730, and a sixth control valve 806 may be disposed on the passage 740.

The control valve 851, the control valve 853, the control valve 855, and the control valve 857 are all connected to a passage 750, and are connected to a fluid storage apparatus 100 through the passage 750.

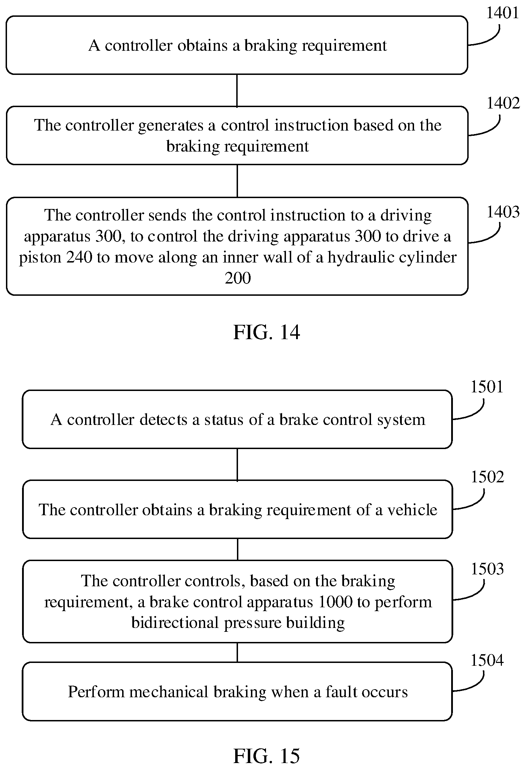

FIG. 14 is a schematic flowchart of a brake control method according to an embodiment of this application. The method shown in FIG. 14 may be performed by a controller in an automobile.

1401: Obtain a braking requirement.

Optionally, the braking requirement such as required duration of a braking force or a required magnitude of a braking force may be generated by collecting a route of a pedal or pressure in a master cylinder.

1402: Generate a control instruction based on the braking requirement, where the control instruction is used to control a driving apparatus 300.

The control instruction may include an operating parameter such as a diversion, a rotational speed, or torque that needs to be provided by the driving apparatus. In other words, the braking requirement is converted into the operating parameter of the driving apparatus 300.

1403: Send the control instruction to the driving apparatus 300, to control the driving apparatus 300 to push a piston 240 to move along an inner wall of a hydraulic cylinder 200.

Optionally, the controller may control the driving apparatus 300 to operate based on the operating parameter such as the diversion, the rotational speed, or the torque in the control instruction, so that the piston 240 moves forward or backward, to provide a braking force for a vehicle. For a specific process, refer to the foregoing related description of a brake control apparatus 1000. Details are not described herein again.

FIG. 15 is a flowchart of a brake control method according to an embodiment of this application. The method shown in FIG. 15 may be performed by a controller in an automobile.

1501: Detect a status of a brake control system.

The controller detects the status of the brake control system, and determines that the brake control system does not become faulty or does not fail and can normally operate.

It should be understood that a specific manner in which the controller detects the status of the brake control system is not limited in this embodiment of this application. The controller may determine the status of the brake control system based on a pressure sensor (not shown in the figure) disposed in the brake control system. For example, the pressure sensor may be disposed on a pipeline in the brake control system, to detect pressure of a brake fluid in the pipeline, and determine the status of the brake control system based on the pressure of the brake fluid in the pipeline. For another example, the controller may further determine the status of the brake control system based on a current pressure building time of the brake control system and an average pressure building time of the brake control system.

1502: Obtain a braking requirement of a vehicle.

It should be understood that the controller may determine, based on an input of a driver (in other words, forming a sensor by using a pedal), that the brake control system has a braking requirement, and the controller may further determine, based on road condition information of the vehicle, that the brake control system has a braking requirement. This is not limited in this embodiment of this application. After it is determined that the vehicle has a braking requirement, step 1520 is performed.

1503: Control, based on the braking requirement, a brake control apparatus 1000 to perform bidirectional pressure building.

Optionally, a driving apparatus 300 initially drives a piston 240 to move from right to left, to perform forward pressure building, and switches to backward pressure building when forward pressure building reaches a limit (the piston 240 cannot continue to advance) but pressure building still needs to be continued. If the requirement is met before the limit is reached, pressure building is stopped. When backward pressure building reaches a limit (the piston 240 cannot continue to back) but pressure building still needs to be continued, backward pressure building is switched to forward pressure building again. Such an operation is repeated, until the braking requirement is met.

Optionally, a driving apparatus 300 initially drives a piston 240 to move from left to right, to perform backward pressure building, and switches to forward pressure building when backward pressure building reaches a limit (the piston 240 cannot continue to back) but pressure building still needs to be continued. If the requirement is met before the limit is reached, pressure building is stopped. When forward pressure building reaches a limit (the piston 240 cannot continue to advance) but pressure building still needs to be continued, forward pressure building is switched to backward pressure building again. Such an operation is repeated, until the braking requirement is met.

1504: Perform mechanical braking when a fault occurs.

A control manner in a mechanical braking mode is the same as a control manner in a conventional solution, and is not described again.

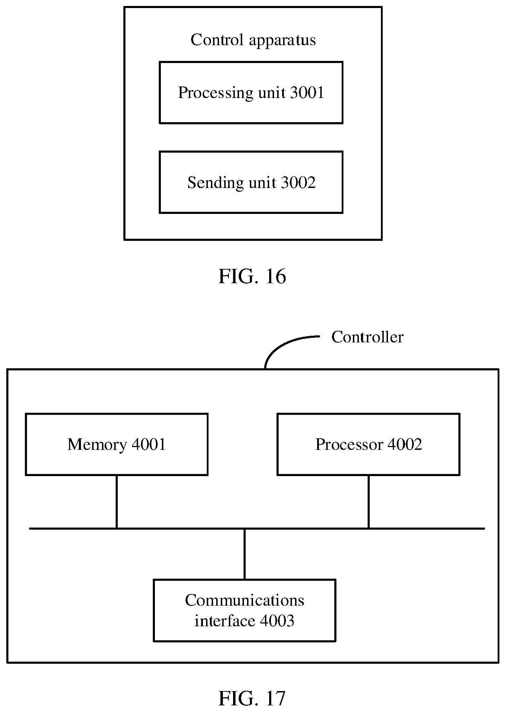

The foregoing describes the control method in embodiments of this application with reference to FIG. 14 and FIG. 15. The following describes a control apparatus that performs the control method with reference to FIG. 16 and FIG. 17. It should be noted that, the apparatus in this embodiment of this application may be applied to any one of the foregoing described control systems, to implement any one of the foregoing described control methods. For brevity, details are not described herein again.

FIG. 16 is a schematic diagram of a control apparatus according to an embodiment of this application. The control apparatus shown in FIG. 16 includes a processing unit 3001 and a sending unit 3002.

The processing unit 3001 is configured to: obtain a braking requirement, and generate a control instruction based on the braking requirement, where the control instruction is used to control a driving apparatus 300.

The sending unit 3002 sends the control instruction to the driving apparatus 300, to control the driving apparatus 300 to drive a push rod 230 to push a piston 240 to move along an inner wall of a hydraulic cylinder 200.

Optionally, the processing unit 3001 may be a processor 4002 in FIG. 17, and the sending unit 3002 may be a communications interface 4003 in FIG. 17.

FIG. 17 is a schematic block diagram of a control apparatus according to an embodiment of this application. The control apparatus shown in FIG. 17 may be a controller in an automobile, and the control apparatus may include a memory 4001, a processor 4002, and a communications interface 4003. The memory 4001, the processor 4002, and the communications interface 4003 are connected through an internal connection path. The memory 4001 is configured to store instructions, and the processor 4002 is configured to execute the instructions stored in the memory 4002, to control the communications interface 4003 to receive/send information. Optionally, the memory 4001 may be coupled to the processor 4002 by using an interface, or integrated with the processor 4002.

It should be noted that, the communications interface 4003 is an apparatus including but not limited to an input/output interface (input/output interface), to implement communication between the controller and another device or a communications network.

In an implementation process, steps in the foregoing method can be implemented by using a hardware integrated logical circuit or an instruction in a form of software in the processor 4002. The methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 4001, and the processor 4002 reads information in the memory 4001 and completes the steps in the foregoing methods in combination with hardware of the processor. To avoid repetition, details are not described herein again.

It should be understood that, the processor in embodiments of this application may be a central processing unit (central processing unit, CPU). The processor may alternatively be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It should be further understood that, in embodiments of this application, the memory may include a read-only memory and a random access memory, and provide an instruction and data for the processor. A part of the processor may further include a non-volatile random access memory. For example, the processor may further store information of a device type.

In embodiments of this application, "first", "second", and various numbers are merely used for differentiation for ease of description, and are not used to limit the scope of embodiments of this application. For example, "first", "second", and various numbers are used to distinguish between different pipelines, through holes, or the like.

It should be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in embodiments of this application, a "fluid outlet pipeline" and a "fluid inlet pipeline" may correspond to different braking pipelines, or may correspond to a same braking pipeline. The "fluid outlet pipeline" and the "fluid inlet pipeline" are distinguished only based on a function of a braking pipeline in a brake control system. For example, when the "fluid outlet pipeline" and the "fluid inlet pipeline" correspond to a same braking pipeline 1, it can be understood that in a process of depressurizing a wheel of an automobile, the braking pipeline (passage) in the brake control system is configured to deliver a brake fluid in a brake wheel cylinder to a fluid storage apparatus. In this case, the braking pipeline may be referred to as a "fluid outlet pipeline". In a process of pressurizing the wheel of the automobile, the braking pipeline is configured to provide a brake fluid for the wheel of the automobile, to provide a braking force for the wheel of the automobile. In this case, the braking pipeline may be referred to as a "fluid inlet pipeline".

In addition, in embodiments of this application, a "fluid inlet valve", a "fluid outlet valve", and a "pressure equalizing valve" are distinguished only based on a function of a control valve in the brake control system. A control valve configured to control a connection or a disconnection of the fluid inlet pipeline may be referred to as a "fluid inlet valve" or a "pressurization valve". A controller configured to control a connection or a disconnection of a fluid return pipeline may be referred to as a "fluid outlet valve" or a "depressurization valve". A control valve configured to isolate a two-stage braking subsystem may be referred to as an "isolation valve". The control valve may be a valve commonly used in an existing brake control system, for example, an electromagnetic valve. This is not specifically limited in embodiments of this application.

In addition, after the control valve is connected to the braking pipeline, ports of the control valve that are connected to the braking pipeline may be represented by a first end and a second end, and a flow direction of a brake fluid between the first end and the second end is not limited in this application. For example, the brake fluid may flow from the first end of the control valve to the second end of the control valve when the control valve is in an open state, or the brake fluid may flow from the second end of the control valve to the first end of the control valve when the control valve is in a closed state.

In addition, in embodiments of this application, when architectures such as a brake control system and an automobile are described with reference to the accompanying drawings, two operating states (a closed state or an open state) that can be implemented by each control valve are shown in the accompanying drawings for illustration, and a current operating state of the control valve is not limited.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the apparatus embodiments described above are only examples. For example, division into the units is only logical function division, and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A brake control apparatus, comprising a hydraulic cylinder (200), a push rod (230), a piston (240), a driving apparatus (300), a first control valve (801), a second control valve (802), a third control valve (803), and a fourth valve (904), wherein the piston (240) is disposed in the hydraulic cylinder (200), to divide the hydraulic cylinder (200) into a first hydraulic chamber (210) and a second hydraulic chamber (220);
the driving apparatus (300) drives the push rod (230) to push the piston (240) to move along an inner wall of the hydraulic cylinder (200);
a first end of the first control valve (801) is connected to the second hydraulic chamber (220), the first end of the first control valve (801) is further connected to a first end of the fourth valve (904), a second end of the first control valve (801) is connected to a braking circuit (420), the second end of the first control valve (801) is further connected to a first end of the second control valve (802), a second end of the second control valve (802) is connected to the first hydraulic chamber (210), the second end of the second control valve (802) is further connected to a first end of the third control valve (803), a second end of the third control valve (803) is connected to a braking circuit (410), and the second end of the third control valve (803) is further connected to a second end of the fourth valve (904); and
opening/closing states of the first control valve (801), the second control valve (802), the third control valve (803), and the fourth valve (904) are controlled,
to allow the first hydraulic chamber (210) to communicate with the second hydraulic chamber (220) when the piston (240) moves toward the first hydraulic chamber (210), and
to prevent the first hydraulic chamber (210) from communicating with the second hydraulic chamber (220) when the piston (240) moves toward the second hydraulic chamber (220).

2. The brake control apparatus according to claim 1, wherein the fourth valve is a fourth one-way valve (904);
when the piston (240) moves toward the first hydraulic chamber (210), the first control valve (801), the second control valve (802), and the third control valve (803) are in an open state, and the fourth one-way valve (904) is in a closed state; and
when the piston (240) moves toward the second hydraulic chamber (220), the first control valve (801) and the fourth one-way valve (904) are in an open state, and the second control valve (802) and the third control valve (803) are in a closed state.

3. The brake control apparatus according to claim 1, wherein the fourth valve is a fourth control valve (804);
when the piston (240) moves toward the first hydraulic chamber (210), the first control valve (801), the second control valve (802), the third control valve (803), and the fourth control valve (804) are in an open state; and
when the piston (240) moves toward the second hydraulic chamber (220), the first control valve (801) and the fourth control valve (804) are in an open state, and the second control valve (802) and the third control valve (803) are in a closed state.

4. The brake control apparatus according to any one of claims 1 to 3, wherein the hydraulic cylinder (200) further comprises an interface (200a), an interface (200b), an interface (200c), and an interface (200d);
the interface (200a) and the interface (200d) are disposed on an outer wall of the hydraulic cylinder (200) in which the second hydraulic chamber (220) is located, and the interface (200b) and the interface (200c) are disposed on the outer wall of the hydraulic cylinder (200) in which the first hydraulic chamber (210) is located;
when the piston (240) moves toward the first hydraulic chamber (210), a brake fluid in the first hydraulic chamber (210) is extruded through the interface (200b), a part of the extruded brake fluid flows into the second hydraulic chamber (220) through the interface (200a), and a brake fluid in a pipeline connected to the interface (200d) flows into the second hydraulic chamber (220); and
when the piston (240) moves toward the second hydraulic chamber (220), a brake fluid in the second hydraulic chamber (220) is extruded through the interface (200a), and a brake fluid in a pipeline connected to the interface (200c) flows into the first hydraulic chamber (210).

5. A brake control system, comprising the brake control apparatus (1000) according to claim 1, a fluid storage apparatus (100), a braking circuit (410), and a braking circuit (420), wherein
the hydraulic cylinder (200) further comprises an interface (200a), an interface (200b), an interface (200c), and an interface (200d), the interface (200a) and the interface (200d) are disposed on an outer wall of the hydraulic cylinder (200) in which the second hydraulic chamber (220) is located, the interface (200b) and the interface (200c) are disposed on the outer wall of the hydraulic cylinder (200) in which the first hydraulic chamber (210) is located, the interface (200d) is connected to the fluid storage apparatus (100), the interface (200c) is connected to a second end of a first one-way valve (901), and a first end of the first one-way valve (901) is connected to the fluid storage apparatus (100).

6. The brake control system according to claim 5, wherein the fourth valve is a fourth one-way valve (904);
when the piston (240) moves toward the first hydraulic chamber (210), the first control valve (801), the second control valve (802), and the third control valve (803) are in an open state, and the first one-way valve (901) and the fourth one-way valve (904) are in a closed state; and
when the piston (240) moves toward the second hydraulic chamber (220), the first control valve (801), the first one-way valve (901), and the fourth one-way valve (904) are in an open state, and the second control valve (802) and the third control valve (803) are in a closed state.

7. The brake control system according to claim 6, wherein the fourth valve is a fourth control valve (804);
when the piston (240) moves toward the first hydraulic chamber (210), the first control valve (801), the second control valve (802), the third control valve (803), and the fourth control valve (804) are in an open state, and the first one-way valve (901) is in a closed state; and
when the piston (240) moves toward the second hydraulic chamber (220), the first control valve (801), the first one-way valve (901), and the fourth control valve (804) are in an open state, and the second control valve (802) and the third control valve (803) are in a closed state.

8. The brake control system according to any one of claims 5 to 7, wherein the brake control system further comprises a braking pedal (620), a master cylinder (610), an eighth control valve (808), a second one-way valve (902), and a pedal simulator (630); and
the master cylinder (610) is connected to the fluid storage apparatus (100), the braking pedal (620) is connected to the master cylinder (610), a first end of the eighth control valve (808) is connected to the master cylinder (610), a second end of the eighth control valve (808) is connected to the pedal simulator (630), a second end of the second one-way valve (902) is connected to the master cylinder (610), a first end of the second one-way valve (902) is connected to the pedal simulator (630), and when the second one-way valve (902) is in an open state, a brake fluid flows from the first end of the second one-way valve (902) to the second end of the second one-way valve (902).

9. The brake control system according to claim 8, wherein the brake control system further comprises normally open control valves: a fifth control valve (805) and a sixth control valve (806), a first end of the fifth control valve (805) is connected to the master cylinder (610), a second end of the fifth control valve (805) is connected to the braking circuit (420), a first end of the sixth control valve (806) is connected to the master cylinder (610), and a second end of the sixth control valve (806) is connected to the braking circuit (410).

10. A control method for a brake control system, wherein the brake control system comprises a brake control apparatus (1000), a fluid storage apparatus (100), a braking circuit (410), and a braking circuit (420);
the brake control apparatus (1000) comprises a hydraulic cylinder (200), a push rod (230), a piston (240), a driving apparatus (300), a first control valve (801), a second control valve (802), a third control valve (803), and a fourth valve, the piston (240) is movably disposed in the hydraulic cylinder (200), to divide the hydraulic cylinder (200) into a first hydraulic chamber (210) and a second hydraulic chamber (220), and the driving apparatus (300) drives the push rod (230) to push the piston (240) to move along an inner wall of the hydraulic cylinder (200);
a first end of the first control valve (801) is connected to the second hydraulic chamber (220), the first end of the first control valve (801) is further connected to a first end of the fourth valve, a second end of the first control valve (801) is connected to the braking circuit (420), the second end of the first control valve (801) is further connected to a first end of the second control valve (802), a second end of the second control valve (802) is connected to the first hydraulic chamber (210), the second end of the second control valve (802) is further connected to a first end of the third control valve (803), a second end of the third control valve (803) is connected to the braking circuit (410), and the second end of the third control valve (803) is further connected to a second end of the fourth valve;
opening/closing states of the first control valve (801), the second control valve (802), the third control valve (803), and the fourth valve are controlled, to allow the first hydraulic chamber (210) to communicate with the second hydraulic chamber (220) when the piston (240) moves toward the first hydraulic chamber (210), and to prevent the first hydraulic chamber (210) from communicating with the second hydraulic chamber (220) when the piston (240) moves toward the second hydraulic chamber (220);
the hydraulic cylinder (200) further comprises an interface (200a), an interface (200b), an interface (200c), and an interface (200d), the interface (200a) and the interface (200d) are disposed on an outer wall of the hydraulic cylinder (200) in which the second hydraulic chamber (220) is located, the interface (200b) and the interface (200c) are disposed on the outer wall of the hydraulic cylinder (200) in which the first hydraulic chamber (210) is located, the interface (200d) is connected to the fluid storage apparatus (100), the interface (200c) is connected to a second end of a first one-way valve (901), and a first end of the first one-way valve (901) is connected to the fluid storage apparatus (100); and
the control method comprises:
obtaining a braking requirement;
generating a control instruction based on the braking requirement, wherein the control instruction is used to control the driving apparatus (300); and
sending the control instruction to the driving apparatus (300), so that the driving apparatus (300) drives, based on the control instruction, the push rod (230) to push the piston (240) to move along an inner wall of the hydraulic cylinder (200).

11. The control method according to claim 10, wherein the fourth valve is a fourth one-way valve (904), and the control instruction is used to control the brake control system to perform at least one of the following operations:
during forward pressure building, pushing, by using the driving apparatus (300), the piston (240) to move toward the first hydraulic chamber (210), to extrude a brake fluid in the first hydraulic chamber (210), wherein the first control valve (801), the second control valve (802), and the third control valve (803) are in an open state, and the first one-way valve (901) and the fourth one-way valve (904) are in a closed state; and
during backward pressure building, pulling, by using the driving apparatus (300), the piston (240) to move toward the second hydraulic chamber (220), wherein the first control valve (801), the first one-way valve (901), and the fourth one-way valve (904) are in an open state, and the second control valve (802) and the third control valve (803) are in a closed state.

12. The control method according to claim 10, wherein the fourth valve is a fourth control valve (804), and the control instruction is used to control the brake control system to perform at least one of the following operations:
during forward pressure building, pushing, by using the driving apparatus (300), the piston (240) to move toward the first hydraulic chamber (210), wherein the first control valve (801), the second control valve (802), the third control valve (803), and the fourth control valve (804) are in an open state, and the first one-way valve (901) is in a closed state; and
during backward pressure building, pulling, by using the driving apparatus (300), the piston (240) to move toward the second hydraulic chamber (220), wherein the first control valve (801), the first one-way valve (901), and the fourth control valve (804) are in an open state, and the second control valve (802) and the third control valve (803) are in a closed state.

13. The control method according to any one of claims 10 to 12, wherein the brake control system further comprises a braking pedal (620), a master cylinder (610), an eighth control valve (808), a second one-way valve (902), and a braking pedal feeling simulator (630);
the master cylinder (610) is connected to the fluid storage apparatus (100), the braking pedal (620) is connected to the master cylinder (610), a first end of the eighth control valve (808) is connected to the master cylinder (610), a second end of the eighth control valve (808) is connected to the braking pedal feeling simulator (630), a second end of the second one-way valve (902) is connected to the master cylinder (610), a first end of the second one-way valve (902) is connected to the braking pedal feeling simulator (630), and when the second one-way valve (902) is in an open state, a brake fluid flows from the first end of the second one-way valve (902) to the second end of the second one-way valve (902); and
the control method further comprises:
determining the braking requirement based on a piston motion route in the master cylinder (610) or pressure in the master cylinder (610).

14. The control method according to claim 13, wherein the brake control system further comprises normally open control valves: a fifth control valve (805) and a sixth control valve (806), a first end of the fifth control valve (805) is connected to the master cylinder (610), a second end of the fifth control valve (805) is connected to the braking circuit (420), a first end of the sixth control valve (806) is connected to the master cylinder (610), and a second end of the sixth control valve (806) is connected to the braking circuit (410); and
the control method further comprises:
during mechanical brake control, stopping operating the brake control apparatus (1000), and driving, by the braking pedal (620), piston motion in the master cylinder (610), to extrude a brake fluid in the master cylinder (610), wherein the extruded brake fluid separately flows to the braking circuit (420) through the fifth control valve (805) and flows to the braking circuit (410) through the sixth control valve (806).

15. A control apparatus for a brake control system, comprising:
a memory, configured to store instructions; and
a processor, configured to read the instructions, to perform the control method according to any one of claims 10 to 14.

## Patentansprüche

1. Bremssteuerungseinrichtung, umfassend einen Hydraulikzylinder (200), eine Schubstange (230), einen Kolben (240), eine Antriebseinrichtung (300), ein erstes Steuerungsventil (801), ein zweites Steuerungsventil (802), ein drittes Steuerungsventil (803) und ein viertes Ventil (904), wobei der Kolben (240) in dem Hydraulikzylinder (200) angeordnet ist, um den Hydraulikzylinder (200) in eine erste Hydraulikkammer (210) und eine zweite Hydraulikkammer (220) zu unterteilen;
wobei die Antriebseinrichtung (300) die Schubstange (230) antreibt, um den Kolben (240) zu drücken, damit er sich entlang einer Innenwand des Hydraulikzylinders (200) bewegt;
ein erstes Ende des ersten Steuerungsventils (801) mit der zweiten Hydraulikkammer (220) verbunden ist, das erste Ende des ersten Steuerungsventils (801) ferner mit einem ersten Ende des vierten Ventils (904) verbunden ist, ein zweites Ende des ersten Steuerungsventils (801) mit einer Bremsschaltung (420) verbunden ist, das zweite Ende des ersten Steuerungsventils (801) ferner mit einem ersten Ende des zweiten Steuerungsventils (802) verbunden ist, ein zweites Ende des zweiten Steuerungsventils (802) mit der ersten Hydraulikkammer (210) verbunden ist, das zweite Ende des zweiten Steuerungsventils (802) ferner mit einem ersten Ende des dritten Steuerungsventils (803) verbunden ist, ein zweites Ende des dritten Steuerungsventils (803) mit einer Bremsschaltung (410) verbunden ist und das zweite Ende des dritten Steuerungsventils (803) ferner mit einem zweiten Ende des vierten Ventils (904) verbunden ist; und
Öffnungs-/Schließzustände des ersten Steuerungsventils (801), des zweiten Steuerungsventils (802), des dritten Steuerungsventils (803) und des vierten Ventils (904) gesteuert werden,
um zu ermöglichen, dass die erste Hydraulikkammer (210) mit der zweiten Hydraulikkammer (220) kommuniziert, wenn sich der Kolben (240) in Richtung der ersten Hydraulikkammer (210) bewegt, und um zu verhindern, dass die erste Hydraulikkammer (210) mit der zweiten Hydraulikkammer (220) kommuniziert, wenn sich der Kolben (240) in Richtung der zweiten Hydraulikkammer (220) bewegt.

2. Bremssteuerungseinrichtung nach Anspruch 1, wobei das vierte Ventil ein viertes Einwegventil (904) ist;
wenn sich der Kolben (240) in Richtung der ersten Hydraulikkammer (210) bewegt, sich das erste Steuerungsventil (801), das zweite Steuerungsventil (802) und das dritte Steuerungsventil (803) in einem offenen Zustand befinden und sich das vierte Einwegventil (904) in einem geschlossenen Zustand befindet; und
wenn sich der Kolben (240) in Richtung der zweiten Hydraulikkammer (220) bewegt, sich das erste Steuerungsventil (801) und das vierte Einwegventil (904) in einem offenen Zustand befinden und sich das zweite Steuerungsventil (802) und das dritte Steuerungsventil (803) in einem geschlossenen Zustand befinden.

3. Bremssteuerungseinrichtung nach Anspruch 1, wobei das vierte Ventil ein viertes Steuerungsventil (804) ist;
wenn sich der Kolben (240) in Richtung der ersten Hydraulikkammer (210) bewegt, sich das erste Steuerungsventil (801), das zweite Steuerungsventil (802), das dritte Steuerungsventil (803) und das vierte Steuerungsventil (804) in einem offenen Zustand befinden; und
wenn sich der Kolben (240) in Richtung der zweiten Hydraulikkammer (220) bewegt, sich das erste Steuerungsventil (801) und das vierte Steuerungsventil (804) in einem offenen Zustand befinden und sich das zweite Steuerungsventil (802) und das dritte Steuerungsventil (803) in einem geschlossenen Zustand befinden.

4. Bremssteuerungseinrichtung nach einem der Ansprüche 1 bis 3, wobei der Hydraulikzylinder (200) ferner eine Schnittstelle (200a), eine Schnittstelle (200b), eine Schnittstelle (200c) und eine Schnittstelle (200d) umfasst;
die Schnittstelle (200a) und die Schnittstelle (200d) an einer Außenwand des Hydraulikzylinders (200), in dem sich die zweite Hydraulikkammer (220) befindet, angeordnet sind und die Schnittstelle (200b) und die Schnittstelle (200c) an der Außenwand des Hydraulikzylinders (200), in dem sich die erste Hydraulikkammer (210) befindet, angeordnet sind;
wenn sich der Kolben (240) in Richtung der ersten Hydraulikkammer (210) bewegt, ein Bremsfluid in der ersten Hydraulikkammer (210) durch die Schnittstelle (200b) extrudiert wird, ein Teil des extrudierten Bremsfluids durch die Schnittstelle (200a) in die zweite Hydraulikkammer (220) fließt und ein Bremsfluid in einer Pipeline, die mit der Schnittstelle (200d) verbunden ist, in die zweite Hydraulikkammer (220) fließt; und
wenn sich der Kolben (240) in Richtung der zweiten Hydraulikkammer (210) bewegt, ein Bremsfluid in der zweiten Hydraulikkammer (220) durch die Schnittstelle (200a) extrudiert wird und ein Bremsfluid in einer Pipeline, die mit der Schnittstelle (200c) verbunden ist, in die erste Hydraulikkammer (220) fließt.

5. Bremssteuerungssystem, umfassend die Bremssteuerungseinrichtung (1000) nach Anspruch 1, eine Fluidspeichereinrichtung (100), eine Bremsschaltung (410) und eine Bremsschaltung (420), wobei
der Hydraulikzylinder (200) ferner eine Schnittstelle (200a), eine Schnittstelle (200b), eine Schnittstelle (200c) und eine Schnittstelle (200d) umfasst, die Schnittstelle (200a) und die Schnittstelle (200d) an einer Außenwand des Hydraulikzylinders (200), in dem sich die zweite Hydraulikkammer (220) befindet, angeordnet sind, die Schnittstelle (200b) und die Schnittstelle (200c) an der Außenwand des Hydraulikzylinders (200), in dem sich die erste Hydraulikkammer (210) befindet, angeordnet sind, die Schnittstelle (200d) mit der Fluidspeichereinrichtung (100) verbunden ist, die Schnittstelle (200c) mit einem zweiten Ende eines ersten Einwegventils (901) verbunden ist und ein erstes Ende des ersten Einwegventils (901) mit der Fluidspeichereinrichtung (100) verbunden ist.

6. Bremssteuerungssystem nach Anspruch 5, wobei das vierte Ventil ein viertes Einwegventil (904) ist;
wenn sich der Kolben (240) in Richtung der ersten Hydraulikkammer (210) bewegt, sich das erste Steuerungsventil (801), das zweite Steuerungsventil (802) und das dritte Steuerungsventil (803) in einem offenen Zustand befinden und sich das erste Einwegventil (901) und das vierte Einwegventil (904) in einem geschlossenen Zustand befinden; und
wenn sich der Kolben (240) in Richtung der zweiten Hydraulikkammer (220) bewegt, sich das erste Steuerungsventil (801), das erste Einwegventil (901) und das vierte Einwegventil (904) in einem offenen Zustand befinden und sich das zweite Steuerungsventil (802) und das dritte Steuerungsventil (803) in einem geschlossenen Zustand befinden.

7. Bremssteuerungssystem nach Anspruch 6, wobei das vierte Ventil ein viertes Steuerungsventil (804) ist;
wenn sich der Kolben (240) in Richtung der ersten Hydraulikkammer (210) bewegt, sich das erste Steuerungsventil (801), das zweite Steuerungsventil (802), das dritte Steuerungsventil (803) und das vierte Steuerungsventil (804) in einem offenen Zustand befinden und sich das erste Einwegventil (901) in einem geschlossenen Zustand befindet; und
wenn sich der Kolben (240) in Richtung der zweiten Hydraulikkammer (220) bewegt, sich das erste Steuerungsventil (801), das erste Einwegventil (901) und das vierte Steuerungsventil (804) in einem offenen Zustand befinden und sich das zweite Steuerungsventil (802) und das dritte Steuerungsventil (803) in einem geschlossenen Zustand befinden.

8. Bremssteuerungssystem nach einem der Ansprüche 5 bis 7, wobei das Bremssteuerungssystem ferner ein Bremspedal (620), einen Masterzylinder (610), ein achtes Steuerungsventil (808), ein zweites Einwegventil (902) und einen Pedalsimulator (630) umfasst; und
der Masterzylinder (610) mit der Fluidspeichereinrichtung (100) verbunden ist, das Bremspedal (620) mit dem Masterzylinder (610) verbunden ist, ein erstes Ende des achten Steuerungsventils (808) mit dem Masterzylinder (610) verbunden ist, ein zweites Ende des achten Steuerungsventils (808) mit dem Pedalsimulator (630) verbunden ist, ein zweites Ende des zweiten Einwegventils (902) mit dem Masterzylinder (610) verbunden ist, ein erstes Ende des zweiten Einwegventils (902) mit dem Pedalsimulator (630) verbunden ist und, wenn sich das zweite Einwegventil (902) in einem offenen Zustand befindet, ein Bremsfluid von dem ersten Ende des zweiten Einwegventils (902) zu dem zweiten Ende des zweiten Einwegventils (902) fließt.

9. Bremssteuerungssystem nach Anspruch 8, wobei das Bremssteuerungssystem ferner üblicherweise offene Steuerungsventile umfasst ein fünftes Steuerungsventil (805) und ein sechstes Steuerungsventil (806), wobei ein erstes Ende des fünften Steuerungsventils (805) mit dem Masterzylinder (610) verbunden ist, ein zweites Ende des fünften Steuerungsventils (805) mit der Bremsschaltung (420) verbunden ist, ein erstes Ende des sechsten Steuerungsventils (806) mit dem Masterzylinder (610) verbunden ist und ein zweites Ende des sechsten Steuerungsventils (806) mit der Bremsschaltung (410) verbunden ist.

10. Steuerungsverfahren für ein Bremssteuerungssystem, wobei das Bremssteuerungssystem eine Bremssteuerungseinrichtung (1000), eine Fluidspeichereinrichtung (100), eine Bremsschaltung (410) und eine Bremsschaltung (420) umfasst;
die Bremssteuerungseinrichtung (1000) einen Hydraulikzylinder (200), eine Schubstange (230), einen Kolben (240), eine Antriebseinrichtung (300), ein erstes Steuerungsventil (801), ein zweites Steuerungsventil (802), ein drittes Steuerungsventil (803) und ein viertes Ventil umfasst, der Kolben (240) bewegbar in dem Hydraulikzylinder (200) angeordnet ist, um den Hydraulikzylinder (200) in eine erste Hydraulikkammer (210) und eine zweite Hydraulikkammer (220) zu unterteilen, und die Antriebseinrichtung (300) die Schubstange (230) antreibt, um den Kolben (240) zu drücken, damit er sich entlang einer Innenwand des Hydraulikzylinders (200) bewegt;
ein erstes Ende des ersten Steuerungsventils (801) mit der zweiten Hydraulikkammer (220) verbunden ist, das erste Ende des ersten Steuerungsventils (801) ferner mit einem ersten Ende des vierten Ventils verbunden ist, ein zweites Ende des ersten Steuerungsventils (801) mit der Bremsschaltung (420) verbunden ist, das zweite Ende des ersten Steuerungsventils (801) ferner mit einem ersten Ende des zweiten Steuerungsventils (802) verbunden ist, ein zweites Ende des zweiten Steuerungsventils (802) mit der ersten Hydraulikkammer (210) verbunden ist, das zweite Ende des zweiten Steuerungsventils (802) ferner mit einem ersten Ende des dritten Steuerungsventils (803) verbunden ist, ein zweites Ende des dritten Steuerungsventils (803) mit der Bremsschaltung (410) verbunden ist und das zweite Ende des dritten Steuerungsventils (803) ferner mit einem zweiten Ende des vierten Ventils verbunden ist;
Öffnungs-/Schließzustände des ersten Steuerungsventils (801), des zweiten Steuerungsventils (802), des dritten Steuerungsventils (803) und des vierten Ventils gesteuert werden, um zu ermöglichen, dass die erste Hydraulikkammer (210) mit der zweiten Hydraulikkammer (220) kommuniziert, wenn sich der Kolben (240) in Richtung der ersten Hydraulikkammer (210) bewegt, und um zu verhindern, dass die erste Hydraulikkammer (210) mit der zweiten Hydraulikkammer (220) kommuniziert, wenn sich der Kolben (240) in Richtung der zweiten Hydraulikkammer (220) bewegt;
der Hydraulikzylinder (200) ferner eine Schnittstelle (200a), eine Schnittstelle (200b), eine Schnittstelle (200c) und eine Schnittstelle (200d) umfasst, die Schnittstelle (200a) und die Schnittstelle (200d) an einer Außenwand des Hydraulikzylinders (200), in dem sich die zweite Hydraulikkammer (220) befindet, angeordnet sind, die Schnittstelle (200b) und die Schnittstelle (200c) an der Außenwand des Hydraulikzylinders (200), in dem sich die erste Hydraulikkammer (210) befindet, angeordnet sind, die Schnittstelle (200d) mit der Fluidspeichereinrichtung (100) verbunden ist, die Schnittstelle (200c) mit einem zweiten Ende eines ersten Einwegventils (901) verbunden ist und ein erstes Ende des ersten Einwegventils (901) mit der Fluidspeichereinrichtung (100) verbunden ist; und
das Steuerungsverfahren Folgendes umfasst:
Erlangen einer Bremsanforderung;
Generieren einer Steuerungsanweisung basierend auf der Bremsanforderung, wobei die Steuerungsanweisung verwendet wird, um die Antriebseinrichtung (300) zu steuern; und
Senden der Steuerungsanweisung an die Antriebseinrichtung (300), sodass die Antriebseinrichtung (300) die Schubstange (230) basierend auf der Steuerungsanweisung antreibt, um den Kolben (240) zu drücken, damit er sich entlang einer Innenwand des Hydraulikzylinders (200) bewegt.

11. Steuerungsverfahren nach Anspruch 10, wobei das vierte Ventil ein viertes Einwegventil (904) ist und die Steuerungsanweisung verwendet wird, um das Bremssteuerungssystem zu steuern, um mindestens einen der folgenden Vorgänge durchzuführen:
während Aufbau von Arbeitsdruck, Drücken, unter Verwendung der Antriebseinrichtung (300), des Kolbens (240), damit er sich in Richtung der ersten Hydraulikkammer (210) bewegt, um ein Bremsfluid in der ersten Hydraulikkammer (210) zu extrudieren,
wobei sich das erste Steuerungsventil (801), das zweite Steuerungsventil (802) und das dritte Steuerungsventil (803) in einem offenen Zustand befinden und sich das erste Einwegventil (901) und das vierte Einwegventil (904) in einem geschlossenen Zustand befinden; und
während Aufbau von Gegendruck, Ziehen, unter Verwendung der Antriebseinrichtung (300), des Kolbens (240), damit er sich in Richtung der zweiten Hydraulikkammer (220) bewegt, wobei sich das erste Steuerungsventil (801), das erste Einwegventil (901) und das vierte Einwegventil (904) in einem offenen Zustand befinden und sich das zweite Steuerungsventil (802) und das dritte Steuerungsventil (803) in einem geschlossenen Zustand befinden.

12. Steuerungsverfahren nach Anspruch 10, wobei das vierte Ventil ein viertes Steuerungsventil (804) ist und die Steuerungsanweisung verwendet wird, um das Bremssteuerungssystem zu steuern, um mindestens einen der folgenden Vorgänge durchzuführen:
während Aufbau von Arbeitsdruck, Drücken, unter Verwendung der Antriebseinrichtung (300), des Kolbens (240), damit er sich in Richtung der ersten Hydraulikkammer (210) bewegt, wobei sich das erste Steuerungsventil (801), das zweite Steuerungsventil (802),
das dritte Steuerungsventil (803) und das vierte Steuerungsventil (804) in einem offenen Zustand befinden und sich das erste Einwegventil (901) in einem geschlossenen Zustand befindet; und
während Aufbau von Gegendruck, Ziehen, unter Verwendung der Antriebseinrichtung (300), des Kolbens (240), damit er sich in Richtung der zweiten Hydraulikkammer (220) bewegt, wobei sich das erste Steuerungsventil (801), das erste Einwegventil (901) und das vierte Steuerungsventil (804) in einem offenen Zustand befinden und sich das zweite Steuerungsventil (802) und das dritte Steuerungsventil (803) in einem geschlossenen Zustand befinden.

13. Steuerungsverfahren nach einem der Ansprüche 10 bis 12, wobei das Bremssteuerungssystem ferner ein Bremspedal (620), einen Masterzylinder (610), ein achtes Steuerungsventil (808), ein zweites Einwegventil (902) und einen Bremspedalfühlsimulator (630) umfasst;
der Masterzylinder (610) mit der Fluidspeichereinrichtung (100) verbunden ist, das Bremspedal (620) mit dem Masterzylinder (610) verbunden ist, ein erstes Ende des achten Steuerungsventils (808) mit dem Masterzylinder (610) verbunden ist, ein zweites Ende des achten Steuerungsventils (808) mit dem Bremspedalfühlsimulator (630) verbunden ist, ein zweites Ende des zweiten Einwegventils (902) mit dem Masterzylinder (610) verbunden ist, ein erstes Ende des zweiten Einwegventils (902) mit dem Bremspedalfühlsimulator (630) verbunden ist und, wenn sich das zweite Einwegventil (902) in einem offenen Zustand befindet, ein Bremsfluid von dem ersten Ende des zweiten Einwegventils (902) zu dem zweiten Ende des zweiten Einwegventils (902) fließt; und
das Steuerungsverfahren ferner Folgendes umfasst:
Bestimmen der Bremsanforderung basierend auf einer Kolbenbewegungsroute in dem Masterzylinder (610) oder dem Druck in dem Masterzylinder (610).

14. Steuerungsverfahren nach Anspruch 13, wobei das Bremssteuerungssystem ferner üblicherweise offene Steuerungsventile umfasst: ein fünftes Steuerungsventil (805) und ein sechstes Steuerungsventil (806), wobei ein erstes Ende des fünften Steuerungsventils (805) mit dem Masterzylinder (610) verbunden ist, ein zweites Ende des fünften Steuerungsventils (805) mit der Bremsschaltung (420) verbunden ist, ein erstes Ende des sechsten Steuerungsventils (806) mit dem Masterzylinder (610) verbunden ist und ein zweites Ende des sechsten Steuerungsventils (806) mit der Bremsschaltung (410) verbunden ist; und
das Steuerungsverfahren ferner Folgendes umfasst:
während mechanischer Bremsteuerung, Einstellen des Betriebs der Bremssteuerungseinrichtung (1000) und Antreiben, durch das Bremspedal (620), von Kolbenbewegung in dem Masterzylinder (610), um ein Bremsfluid in dem Masterzylinder (610) zu extrudieren, wobei das extrudierte Bremsfluid separat durch das fünfte Steuerungsventil (805) zu der Bremsschaltung (420) fließt und durch das sechste Steuerungsventil (806) zu der Bremsschaltung (410) fließt.

15. Steuerungseinrichtung für ein Bremssteuerungssystem, umfassend:
einen Speicher, der dazu konfiguriert ist, Anweisungen zu speichern; und
einen Prozessor, der dazu konfiguriert ist, die Anweisungen zu lesen, um das Steuerungsverfahren nach einem der Ansprüche 10 bis 14 durchzuführen.

## Revendications

1. Appareil de commande de frein, comprenant un cylindre hydraulique (200), une tige de poussée (230), un piston (240), un appareil d'entraînement (300), une première vanne de commande (801), une deuxième vanne de commande (802), une troisième vanne de commande (803) et une quatrième vanne (904), dans lequel le piston (240) est disposé dans le cylindre hydraulique (200), pour diviser le cylindre hydraulique (200) en une première chambre hydraulique (210) et une seconde chambre hydraulique (220) ;
l'appareil d'entraînement (300) entraîne la tige de poussée (230) pour pousser le piston (240) à se déplacer le long d'une paroi interne du cylindre hydraulique (200) ;
une première extrémité de la première vanne de commande (801) est connectée à la seconde chambre hydraulique (220), la première extrémité de la première vanne de commande (801) est également connectée à une première extrémité de la quatrième vanne (904), une seconde extrémité de la première vanne de commande (801) est connectée à un circuit de freinage (420), la seconde extrémité de la première vanne de commande (801) est également connectée à une première extrémité de la deuxième vanne de commande (802), une seconde extrémité de la deuxième vanne de commande (802) est connectée à la première chambre hydraulique (210), la seconde extrémité de la deuxième vanne de commande (802) est également connectée à une première extrémité de la troisième vanne de commande (803), une seconde extrémité de la troisième vanne de commande (803) est connectée à un circuit de freinage (410), et la seconde extrémité de la troisième vanne de commande (803) est également connectée à une seconde extrémité de la quatrième vanne (904) ; et
les états d'ouverture/fermeture de la première vanne de commande (801), de la deuxième vanne de commande (802), de la troisième vanne de commande (803) et de la quatrième vanne (904) sont commandés,
pour permettre à la première chambre hydraulique (210) de communiquer avec la seconde chambre hydraulique (220) lorsque le piston (240) se déplace vers la première chambre hydraulique (210), et
pour empêcher la première chambre hydraulique (210) de communiquer avec la seconde chambre hydraulique (220) lorsque le piston (240) se déplace vers la seconde chambre hydraulique (220).

2. Appareil de commande de frein selon la revendication 1, dans lequel la quatrième vanne est une quatrième vanne unidirectionnelle (904) ;
lorsque le piston (240) se déplace vers la première chambre hydraulique (210), la première vanne de commande (801), la deuxième vanne de commande (802) et la troisième vanne de commande (803) sont dans un état ouvert, et la quatrième vanne unidirectionnelle (904) est dans un état fermé ; et
lorsque le piston (240) se déplace vers la seconde chambre hydraulique (220), la première vanne de commande (801) et la quatrième vanne unidirectionnelle (904) sont dans un état ouvert, et la deuxième vanne de commande (802) et la troisième vanne de commande (803) sont dans un état fermé.

3. Appareil de commande de frein selon la revendication 1, dans lequel la quatrième vanne est une quatrième vanne de commande (804) ;
lorsque le piston (240) se déplace vers la première chambre hydraulique (210), la première vanne de commande (801), la deuxième vanne de commande (802), la troisième vanne de commande (803) et la quatrième vanne de commande (804) sont dans un état ouvert ; et
lorsque le piston (240) se déplace vers la seconde chambre hydraulique (220), la première vanne de commande (801) et la quatrième vanne de commande (804) sont dans un état ouvert, et la deuxième vanne de commande (802) et la troisième vanne de commande (803) sont dans un état fermé.

4. Appareil de commande de frein selon l'une quelconque des revendications 1 à 3, dans lequel le cylindre hydraulique (200) comprend également une interface (200a), une interface (200b), une interface (200c) et une interface (200d) ;
l'interface (200a) et l'interface (200d) sont disposées sur une paroi externe du cylindre hydraulique (200) dans laquelle se trouve la seconde chambre hydraulique (220), et l'interface (200b) et l'interface (200c) sont disposées sur la paroi externe du cylindre hydraulique (200) dans laquelle se trouve la première chambre hydraulique (210) ;
lorsque le piston (240) se déplace vers la première chambre hydraulique (210), un liquide de frein dans la première chambre hydraulique (210) est extrudé à travers l'interface (200b), une partie du liquide de frein extrudé s'écoule dans la seconde chambre hydraulique (220) à travers l'interface (200a), et un liquide de frein dans un pipeline connecté à l'interface (200d) s'écoule dans la seconde chambre hydraulique (220) ; et
lorsque le piston (240) se déplace vers la seconde chambre hydraulique (220), un liquide de frein dans la seconde chambre hydraulique (220) est extrudé à travers l'interface (200a), et un liquide de frein dans un pipeline connecté à l'interface (200c) s'écoule dans la première chambre hydraulique (210).

5. Système de commande de frein, comprenant l'appareil de commande de frein (1000) selon la revendication 1, un appareil de stockage de fluide (100), un circuit de freinage (410) et un circuit de freinage (420), dans lequel
le cylindre hydraulique (200) comprend également une interface (200a), une interface (200b), une interface (200c) et une interface (200d), l'interface (200a) et l'interface (200d) sont disposées sur une paroi externe du cylindre hydraulique (200) dans laquelle se trouve la seconde chambre hydraulique (220), l'interface (200b) et l'interface (200c) sont disposées sur la paroi externe du cylindre hydraulique (200) dans laquelle se trouve la première chambre hydraulique (210), l'interface (200d) est connectée à l'appareil de stockage de fluide (100), l'interface (200c) est connectée à une seconde extrémité d'une première vanne unidirectionnelle (901) et une première extrémité de la première vanne unidirectionnelle (901) est connectée à l'appareil de stockage de fluide (100).

6. Système de commande de frein selon la revendication 5, dans lequel la quatrième vanne est une quatrième vanne unidirectionnelle (904) ;
lorsque le piston (240) se déplace vers la première chambre hydraulique (210), la première vanne de commande (801), la deuxième vanne de commande (802) et la troisième vanne de commande (803) sont dans un état ouvert, et la première vanne unidirectionnelle (901) et la quatrième vanne unidirectionnelle (904) sont dans un état fermé ; et
lorsque le piston (240) se déplace vers la seconde chambre hydraulique (220), la première vanne de commande (801), la première vanne unidirectionnelle (901) et la quatrième vanne unidirectionnelle (904) sont dans un état ouvert, et la deuxième vanne de commande (802) et la troisième vanne de commande (803) sont dans un état fermé.

7. Système de commande de frein selon la revendication 6, dans lequel la quatrième vanne est une quatrième vanne de commande (804) ;
lorsque le piston (240) se déplace vers la première chambre hydraulique (210), la première vanne de commande (801), la deuxième vanne de commande (802), la troisième vanne de commande (803) et la quatrième vanne de commande (804) sont dans un état ouvert, et la première vanne unidirectionnelle (901) est dans un état fermé ; et
lorsque le piston (240) se déplace vers la seconde chambre hydraulique (220), la première vanne de commande (801), la première vanne unidirectionnelle (901) et la quatrième vanne de commande (804) sont dans un état ouvert, et la deuxième vanne de commande (802) et la troisième vanne de commande (803) sont dans un état fermé.

8. Système de commande de frein selon l'une quelconque des revendications 5 à 7, dans lequel le système de commande de frein comprend également une pédale de freinage (620), un maître-cylindre (610), une huitième vanne de commande (808), une deuxième vanne unidirectionnelle (902) et un simulateur de pédale (630) ; et
le maître-cylindre (610) est connecté à l'appareil de stockage de fluide (100), la pédale de freinage (620) est connectée au maître-cylindre (610), une première extrémité de la huitième vanne de commande (808) est connectée au maître-cylindre (610), une seconde extrémité de la huitième vanne de commande (808) est connectée au simulateur de pédale (630), une seconde extrémité de la deuxième vanne unidirectionnelle (902) est connectée au maître-cylindre (610), une première extrémité de la deuxième vanne unidirectionnelle (902) est connectée au simulateur de pédale (630), et lorsque la deuxième vanne unidirectionnelle (902) est dans un état ouvert, un liquide de frein s'écoule de la première extrémité de la deuxième vanne unidirectionnelle (902) à la seconde extrémité de la deuxième vanne unidirectionnelle (902).

9. Système de commande de frein selon la revendication 8, dans lequel le système de commande de frein comprend également des vannes de commande normalement ouvertes : une cinquième vanne de commande (805) et une sixième vanne de commande (806), une première extrémité de la cinquième vanne de commande (805) est connectée au maître-cylindre (610), une seconde extrémité de la cinquième vanne de commande (805) est connectée au circuit de freinage (420), une première extrémité de la sixième vanne de commande (806) est connectée au maître-cylindre (610) et une seconde extrémité de la sixième vanne de commande (806) est connectée au circuit de freinage (410).

10. Procédé de commande pour un système de commande de frein, dans lequel le système de commande de frein comprend un appareil de commande de frein (1000), un appareil de stockage de fluide (100), un circuit de freinage (410) et un circuit de freinage (420) ;
l'appareil de commande de frein (1000) comprend un cylindre hydraulique (200), une tige de poussée (230), un piston (240), un appareil d'entraînement (300), une première vanne de commande (801), une deuxième vanne de commande (802), une troisième vanne de commande (803) et une quatrième vanne, le piston (240) est disposé de manière mobile dans le cylindre hydraulique (200), pour diviser le cylindre hydraulique (200) en une première chambre hydraulique (210) et une seconde chambre hydraulique (220), et l'appareil d'entraînement (300) entraîne la tige de poussée (230) pour pousser le piston (240) à se déplacer le long d'une paroi interne du cylindre hydraulique (200) ;
une première extrémité de la première vanne de commande (801) est connectée à la seconde chambre hydraulique (220), la première extrémité de la première vanne de commande (801) est également connectée à une première extrémité de la quatrième vanne, une seconde extrémité de la première vanne de commande (801) est connectée au circuit de freinage (420), la seconde extrémité de la première vanne de commande (801) est également connectée à une première extrémité de la deuxième vanne de commande (802), une seconde extrémité de la deuxième vanne de commande (802) est connectée à la première chambre hydraulique (210), la seconde extrémité de la deuxième vanne de commande (802) est également connectée à une première extrémité de la troisième vanne de commande (803), une seconde extrémité de la troisième vanne de commande (803) est connectée au circuit de freinage (410), et la seconde extrémité de la troisième vanne de commande (803) est également connectée à une seconde extrémité de la quatrième vanne ;
les états d'ouverture/fermeture de la première vanne de commande (801), de la deuxième vanne de commande (802), de la troisième vanne de commande (803) et de la quatrième vanne sont commandés, pour permettre à la première chambre hydraulique (210) de communiquer avec la seconde chambre hydraulique (220) lorsque le piston (240) se déplace vers la première chambre hydraulique (210), et pour empêcher la première chambre hydraulique (210) de communiquer avec la seconde chambre hydraulique (220) lorsque le piston (240) se déplace vers la seconde chambre hydraulique (220) ;
le cylindre hydraulique (200) comprend également une interface (200a), une interface (200b), une interface (200c) et une interface (200d), l'interface (200a) et l'interface (200d) sont disposées sur une paroi externe du cylindre hydraulique (200) dans laquelle se trouve la seconde chambre hydraulique (220), l'interface (200b) et l'interface (200c) sont disposées sur la paroi externe du cylindre hydraulique (200) dans laquelle se trouve la première chambre hydraulique (210), l'interface (200d) est connectée à l'appareil de stockage de fluide (100), l'interface (200c) est connectée à une seconde extrémité d'une première vanne unidirectionnelle (901) et une première extrémité de la première vanne unidirectionnelle (901) est connectée à l'appareil de stockage de fluide (100) ; et
le procédé de commande comprend :
l'obtention d'un besoin de freinage ;
la génération d'une instruction de commande sur la base du besoin de freinage, dans lequel l'instruction de commande est utilisée pour commander l'appareil d'entraînement (300) ; et
l'envoi de l'instruction de commande à l'appareil d'entraînement (300), de sorte que l'appareil d'entraînement (300) entraîne, sur la base de l'instruction de commande, la tige de poussée (230) pour pousser le piston (240) à se déplacer le long d'une paroi interne du cylindre hydraulique (200).

11. Procédé de commande selon la revendication 10, dans lequel la quatrième vanne est une quatrième vanne unidirectionnelle (904), et l'instruction de commande est utilisée pour commander le système de commande de frein afin de réaliser au moins l'une des opérations suivantes :
pendant l'accumulation de pression avant, la poussée, à l'aide de l'appareil d'entraînement (300), du piston (240) pour qu'il se déplace vers la première chambre hydraulique (210), pour extruder un liquide de frein dans la première chambre hydraulique (210), dans lequel la première vanne de commande (801), la deuxième vanne de commande (802) et la troisième vanne de commande (803) sont dans un état ouvert, et la première vanne unidirectionnelle (901) et la quatrième vanne unidirectionnelle (904) sont dans un état fermé ; et
pendant l'accumulation de pression arrière, le tirage, à l'aide de l'appareil d'entraînement (300), du piston (240) pour qu'il se déplace vers la seconde chambre hydraulique (220), dans lequel la première vanne de commande (801), la première vanne unidirectionnelle (901) et la quatrième vanne unidirectionnelle (904) sont dans un état ouvert, et la deuxième vanne de commande (802) et la troisième vanne de commande (803) sont dans un état fermé.

12. Procédé de commande selon la revendication 10, dans lequel la quatrième vanne est une quatrième vanne de commande (804), et l'instruction de commande est utilisée pour commander le système de commande de frein afin de réaliser au moins l'une des opérations suivantes :
pendant l'accumulation de pression avant, la poussée, à l'aide de l'appareil d'entraînement (300), du piston (240) pour qu'il se déplace vers la première chambre hydraulique (210), dans lequel la première vanne de commande (801), la deuxième vanne de commande (802), la troisième vanne de commande (803) et la quatrième vanne de commande (804) sont dans un état ouvert, et la première vanne unidirectionnelle (901) est dans un état fermé ; et
pendant l'accumulation de pression arrière, le tirage, à l'aide de l'appareil d'entraînement (300), du piston (240) pour qu'il se déplace vers la seconde chambre hydraulique (220), dans lequel la première vanne de commande (801), la première vanne unidirectionnelle (901) et la quatrième vanne de commande (804) sont dans un état ouvert, et la deuxième vanne de commande (802) et la troisième vanne de commande (803) sont dans un état fermé.

13. Procédé de commande selon l'une quelconque des revendications 10 à 12, dans lequel le système de commande de frein comprend également une pédale de freinage (620), un maître-cylindre (610), une huitième vanne de commande (808), une deuxième vanne unidirectionnelle (902) et un simulateur de sensation de pédale de freinage (630) ;
le maître-cylindre (610) est connecté à l'appareil de stockage de fluide (100), la pédale de freinage (620) est connectée au maître-cylindre (610), une première extrémité de la huitième vanne de commande (808) est connectée au maître-cylindre (610), une seconde extrémité de la huitième vanne de commande (808) est connectée au simulateur de sensation de pédale de freinage (630), une seconde extrémité de la deuxième vanne unidirectionnelle (902) est connectée au maître-cylindre (610), une première extrémité de la deuxième vanne unidirectionnelle (902) est connectée au simulateur de sensation de pédale de freinage (630), et lorsque la deuxième vanne unidirectionnelle (902) est dans un état ouvert, un liquide de frein s'écoule de la première extrémité de la deuxième vanne unidirectionnelle (902) à la seconde extrémité de la deuxième vanne unidirectionnelle (902) ; et
le procédé de commande comprend également :
la détermination du besoin de freinage sur la base d'une course de mouvement de piston dans le maître-cylindre (610) ou de la pression dans le maître-cylindre (610).

14. Procédé de commande selon la revendication 13, dans lequel le système de commande de frein comprend également des vannes de commande normalement ouvertes : une cinquième vanne de commande (805) et une sixième vanne de commande (806), une première extrémité de la cinquième vanne de commande (805) est connectée au maître-cylindre (610), une seconde extrémité de la cinquième vanne de commande (805) est connectée au circuit de freinage (420), une première extrémité de la sixième vanne de commande (806) est connectée au maître-cylindre (610) et une seconde extrémité de la sixième vanne de commande (806) est connectée au circuit de freinage (410) ; et
le procédé de commande comprend également :
pendant la commande de frein mécanique, l'arrêt du fonctionnement de l'appareil de commande de frein (1000) et l'entraînement, par la pédale de freinage (620), du mouvement de piston dans le maître-cylindre (610), pour extruder un liquide de frein dans le maître-cylindre (610), dans lequel le liquide de frein extrudé s'écoule séparément vers le circuit de freinage (420) à travers la cinquième vanne de commande (805) et s'écoule vers le circuit de freinage (410) à travers la sixième vanne de commande (806).

15. Appareil de commande pour un système de commande de frein, comprenant :
une mémoire, configurée pour stocker des instructions ; et
un processeur, configuré pour lire les instructions, afin d'exécuter le procédé de commande selon l'une quelconque des revendications 10 à 14.
